# EUROPEAN PATENT APPLICATION

(11) **EP 4 362 537 A1**
(43) Date of publication of application: **01.05.2024**
(21) Application number: 22841215.1
(22) Date of filing: 04.07.2022
(51) Int. Cl.: H04W 24/08, H04W 24/02, H04L 41/00

(54) **METHOD AND APPARATUS FOR DETECTING DATA STREAM**

(30) Priority: 16.07.2021 CN 202110805511
(71) Applicant: Huawei Technologies Co., Ltd., Shenzhen, Guangdong 518129 (CN)
(72) Inventor: ZHU, Haoren, Shenzhen, Guangdong 518129 (CN); ZHU, Hualin, Shenzhen, Guangdong 518129 (CN); XU, Yishan, Shenzhen, Guangdong 518129 (CN)
(74) Representative: Grünecker Patent- und Rechtsanwälte PartG mbB
(86) International application number: PCT/CN2022/103632
(87) International publication number: WO 2023/284577

(57) **Abstract**

This application provides a data flow detection method and an apparatus, to quickly locate user plane transmission, and further improve accuracy of obtaining data plane information. The method includes: A user plane function network element receives first indication information, and performs in-situ flow information telemetry on a data flow of a terminal device based on the first indication information. In this way, detection is performed based on a real data packet, and additional data traffic does not need to be simulated, so that a detection result is more timely and accurate.

## Description

This application claims priority to Chinese Patent Application No. 202110805511.0, filed with the China National Intellectual Property Administration on July 16, 2021 and entitled "DATA FLOW DETECTION METHOD AND APPARATUS", which is incorporated herein by reference in its entirety.

### TECHNICAL FIELD

This application relates to the communication field, and more specifically, to a data flow detection method and an apparatus.

### BACKGROUND

A detection technology for a quality of service (quality of service, QoS) flow is defined for a current cellular network, but a current detection technology cannot implement independent detection of a user plane node. In addition, it is time-consuming and inaccurate to locate end-to-end user plane transmission by using the current detection technology. How to implement independent detection of a user plane node becomes an urgent problem to be resolved.

### SUMMARY

In view of this, this application provides a data flow detection method and an apparatus, to quickly locate user plane transmission.

According to a first aspect, a data flow detection method is provided, including: A user plane function network element (or a chip in the user plane function network element) receives first indication information from a session management network element, where the first indication information indicates the user plane function network element to perform in-situ flow information telemetry on a data flow of a terminal device, and performs in-situ flow information telemetry on the data flow of the terminal device based on the first indication information. Compared with the conventional technology, in the data flow detection method in this embodiment of this application, the user plane function network element performs in-situ flow information telemetry based on the first indication information, so that user plane transmission can be quickly located, and accuracy of obtaining data plane information can be further improved.

"Detection" may be replaced with "Monitoring" or the like.

"In-situ flow information telemetry" may include one or more of the following: identifying an anomaly based on real-time service traffic, performing detection based on actual user traffic, implementing per-packet detection, and obtaining more comprehensive data plane information. This can improve comprehensiveness, timeliness, and accuracy of obtaining data plane information.

The user plane function network element may be a downlink head node, an uplink tail node, or an intermediate node in a detecting/monitoring network (for example, a network including a transport network and/or a cellular network).

In a possible implementation, the user plane function network element is a downlink head node.

Optionally, the method further includes: The user plane function network element receives information about a first detection action, where the first detection action is used for the data flow (including an uplink data flow and a downlink data flow), receives a first data packet of the data flow (where the first data packet may be a first uplink data packet or a first downlink data packet), and performs, on the first data packet, a detection action indicated by the information about the first detection action.

Optionally, the first data packet is a first downlink data packet. The method further includes: The user plane function network element generates a first detection rule based on the information about the first detection action, and sends a second downlink data packet to a next-hop node, where the second downlink data packet includes the first detection rule, and the first detection rule indicates an action of performing, by the next-hop node, in-situ flow information telemetry on the second downlink data packet. The first detection rule is used to notify a processing action, where the processing action includes one or more of the following content: coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, obtained information reporting, and the like. It should be understood that the content included in the processing action is merely an example for description, and this application is not limited thereto. The next-hop node may be a router, a switch, an access network device, another user plane function network element, or another transmission node. This is not limited.

In other words, when the user plane function network element is the downlink head node, in addition to performing in-situ flow information telemetry based on the information about the first detection action, the user plane function network element further needs to notify the next-hop node of the first detection rule, so that the next-hop node also performs in-situ flow information telemetry.

Optionally, the second downlink data packet carries second indication information, and the second indication information indicates the next-hop node to perform in-situ flow information telemetry on the second downlink data packet.

Optionally, the method further includes: The user plane function network element receives first information from the session management network element, where the first information indicates that the user plane function network element is the downlink head node. Therefore, the user plane function network element can learn, based on the first information, that the user plane function network element is the downlink head node.

Optionally, the second downlink data packet is an IPv6 packet, an IPv4 packet, an SRV6 packet, an Ethernet packet, or a GTP-U protocol packet. The IPv4 packet is an IPv4-enhanced protocol, and an IPv4 packet header may be extended, and is represented by IPv4-en (IPv4-enhanced) herein.

In a possible implementation, the user plane function network element is an uplink tail node. The first data packet is a first uplink data packet. That the user plane function network element performs in-situ flow information telemetry on the data flow of the terminal device includes: The first uplink data packet carries third indication information, where the third indication information indicates the user plane function network element to perform in-situ flow information telemetry. The user plane function network element performs in-situ flow information telemetry based on the third indication information. The user plane function network element sends a second uplink data packet to a next-hop node, where the second uplink data packet does not include the third indication information. Therefore, when the user plane function network element is the uplink tail node, the user plane function network element needs to strip the third indication information, that is, does not need to send the third indication information to the next-hop node.

Optionally, the method further includes: The user plane function network element receives second information from the session management network element, where the second information indicates that the user plane function network element is the uplink tail node. Therefore, the user plane function network element may learn, based on an indication of the session management network element, whether the user plane function network element is the uplink tail node.

Optionally, the first uplink data packet is an IPv6 packet, an IPv4 packet, an SRV6 packet, an Ethernet packet, or a GTP-U protocol packet. For descriptions of the IPv4 packet, refer to the foregoing descriptions. Details are not described herein again.

Optionally, the second uplink data packet is an IPv6 packet, an IPv4 packet, an SRV6 packet, an Ethernet packet, or a GTP-U protocol packet.

In a possible implementation, the user plane function network element is an intermediate node, the first data packet carries fourth indication information, and the fourth indication information indicates the user plane function network element to perform in-situ flow information telemetry on the first data packet. That the user plane function network element performs in-situ flow information telemetry on the data flow of the terminal device includes: The user plane function network element performs in-situ flow information telemetry on the first data packet based on the fourth indication information, and sends a second data packet to a next-hop node, where the second data packet carries fifth indication information, and the fifth indication information indicates the next-hop node to perform in-situ flow information telemetry on the second data packet. Compared with an implementation in which the user plane function network element is the uplink tail node, in this implementation, the user plane function network element does not need to strip the fifth indication information (or a detection field) off the data packet.

The intermediate node may be understood as a node other than a terminating node and a starting node in nodes that support an in-situ flow information telemetry technology (for example, an IFIT/IOAM protocol).

According to a second aspect, a data flow detection method is provided, including: A terminal device (or a chip in the terminal device) receives fifth indication information from a session management network element, where the fifth indication information indicates the terminal device to perform in-situ flow information telemetry on a data flow of the terminal device, and performs in-situ flow information telemetry on the data flow of the terminal device based on the fifth indication information. Compared with the conventional technology, in the data flow detection method in this embodiment of this application, the terminal device can perform in-situ flow information telemetry based on an indication, and can quickly locate user plane transmission.

Optionally, the method further includes: The terminal device receives information about a second detection action, where the second detection action is used for the data flow (including an uplink data flow and a downlink data flow). That the terminal device performs in-situ flow information telemetry on the data flow of the terminal device includes: The terminal device performs, on a third data packet of the data flow (whether the third data packet is a downlink data packet or an uplink data packet is not limited herein, and the third data packet may be a third uplink data packet or a third downlink data packet), a detection action indicated by the information about the second detection action.

In a possible implementation, the terminal device is an uplink head node. The third data packet is a third uplink data packet. The method further includes: The terminal device generates a second detection rule based on the information about the second detection action, and sends a fourth uplink data packet to an access network device, where the fourth uplink data packet includes the second detection rule, and the second detection rule indicates an action of performing, by the access network device, in-situ flow information telemetry on the fourth uplink data packet. In other words, when the terminal device is the uplink head node, in addition to performing in-situ flow information telemetry, the terminal device may further add an indication to an uplink data packet, to indicate the access network device to perform in-situ flow information telemetry.

The second detection rule is used to notify a processing action, where the processing action includes one or more of the following content: coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, obtained information reporting, and the like. It should be understood that the content included in the processing action is merely an example for description, and this application is not limited thereto.

Optionally, the fourth uplink data packet carries sixth indication information, and the sixth indication information indicates the access network device to perform in-situ flow information telemetry on the fourth uplink data packet.

Optionally, the method further includes: The terminal device receives third information from the session management network element, where the third information indicates that the terminal device is the uplink head node. Therefore, the terminal device may learn, based on an indication of the session management network element, whether the terminal device is the uplink head node.

Optionally, the fourth uplink data packet is an access network protocol packet, for example, an SDAP packet.

In a possible implementation, the terminal device is a downlink tail node. The third data packet is a third downlink data packet. The third downlink data packet includes seventh indication information, and the seventh indication information indicates the terminal device to perform in-situ flow information telemetry on the third downlink data packet. The terminal device performs in-situ flow information telemetry on the third downlink data packet based on the seventh indication information.

Optionally, the method further includes: The terminal device receives fourth information from the session management network element, where the fourth information indicates that the terminal device is a downlink tail node. Therefore, the terminal device may learn, based on the fourth information sent by the session management network element, that the terminal device is the downlink tail node.

Optionally, the third downlink data packet is an access network protocol packet, for example, an SDAP packet.

In a possible implementation, the terminal device is an intermediate node. For example, the terminal device is 5G UE/CPE. The third data packet carries ninth indication information, and the ninth indication information indicates the terminal device to perform in-situ flow information telemetry on the third data packet. The terminal device performs in-situ flow information telemetry on the third data packet based on the ninth indication information. The terminal device sends a fourth data packet to a next-hop node, where the fourth data packet carries tenth indication information, and the tenth indication information indicates the next-hop node to perform in-situ flow information telemetry on the fourth data packet. In other words, when the terminal device is the intermediate node, in addition to performing in-situ flow information telemetry, the terminal device may further add an indication to a data packet, to indicate the next-hop node to perform in-situ flow information telemetry.

According to a third aspect, a data flow detection method is provided, including: An access network device (or a chip in the access network device) receives eighth indication information from a session management network element, where the eighth indication information indicates the access network device to perform in-situ flow information telemetry on a data flow of a terminal device, and performs in-situ flow information telemetry on the data flow of the terminal device based on the eighth indication information. Compared with the conventional technology, in the data flow detection method in this embodiment of this application, the access network device can perform in-situ flow information telemetry based on an indication, and can quickly locate user plane transmission. The session management network element activates an in-situ flow information telemetry function of the access network device based on the eighth indication information.

In a possible implementation, in uplink transmission, that the access network device performs in-situ flow information telemetry on the data flow of the terminal device based on the eighth indication information includes: The access network device receives a fourth uplink data packet from the terminal device, where the fourth uplink data packet includes a second detection rule, and the second detection rule indicates an action of performing, by the access network device, in-situ flow information telemetry on the fourth uplink data packet. The access network device performs in-situ flow information telemetry based on the second detection rule, to obtain an execution result.

Optionally, the method further includes: The access network device generates third indication information, where the third indication information indicates a user plane function network element to perform in-situ flow information telemetry. The access network device sends a first uplink data packet to the user plane function network element, where the first uplink data packet carries the third indication information. Therefore, the access network device can perform in-situ flow information telemetry based on the second detection rule, and add the third indication information to an uplink data packet when sending the uplink data packet to the access network device, to indicate the user plane function network element to perform in-situ flow information telemetry.

The access network device may generate the third indication information based on the execution result, or may not generate the third indication information based on the execution result. This is not limited in this application.

Optionally, the first uplink data packet is an IPv6 packet, an IPv4 packet, an SRV6 packet, an Ethernet packet, or a GTP-U protocol packet.

Optionally, the fourth uplink data packet is an access network protocol packet.

Certainly, in uplink transmission, the access network device may be an intermediate node or an uplink head node. This is not specifically limited in this application.

In a possible implementation, the access network device may be an uplink head node.

When the access network device is the uplink head node, behavior of the access network device is similar to behavior of the terminal device when the terminal device is an uplink head node. Optionally, the method further includes: The access network device receives information about a third detection action, where the third detection action is used for the data flow. The access network device receives a fifth data packet. The access network device performs, on the fifth data packet of the data flow, a detection action indicated by the information about the third detection action. In other words, the access network device may also be used as the uplink head node to perform in-situ flow information telemetry.

Similarly to a terminal device side, optionally, the fifth data packet is a fifth uplink data packet. The method further includes: The access network device generates a third detection rule based on the information about the third detection action, and sends a sixth uplink data packet to a next-hop node, where the sixth uplink data packet includes the third detection rule, and the third detection rule indicates an action of performing, by the next-hop node, in-situ flow information telemetry on the sixth uplink data packet. In other words, when the access network device is used as the uplink head node, the access network device may also send a detection rule to the next-hop node. The third detection rule is used to notify a processing action, where the processing action includes one or more of the following content: coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, obtained information reporting, and the like. It should be understood that the content included in the processing action is merely an example for description, and this application is not limited thereto. The next-hop node may be a router, a switch, an access network device, another user plane function network element, or another transmission node. This is not limited.

In a possible implementation, in downlink transmission, the method further includes: The access network device receives a second downlink data packet, where the second downlink data packet includes a first detection rule, and the first detection rule indicates an action of performing, by the access network, in-situ flow information telemetry on the second downlink data packet. The access network device performs in-situ flow information telemetry based on second indication information, to obtain an execution result. The access network device determines sixth indication information based on the execution result, where the sixth indication information indicates the terminal device to perform in-situ flow information telemetry. The access network device sends a third downlink data packet to the terminal device, where the third downlink data packet includes seventh indication information, and the seventh indication information indicates the terminal device to perform in-situ flow information telemetry on the third downlink data packet. Therefore, the access network device can perform in-situ flow information telemetry based on the first detection rule, and add the seventh indication information to a downlink data packet when sending the downlink data packet to the terminal device, to indicate the terminal device to perform in-situ flow information telemetry.

Optionally, the second downlink data packet is an IPv6 packet, an IPv4 packet, an SRV6 packet, an Ethernet packet, or a GTP-U protocol packet.

Optionally, the third downlink data packet is an access network protocol packet.

Certainly, in downlink transmission, the access network device may be an intermediate node or a downlink head node. This is not specifically limited in this application.

In a possible implementation, the access network device may be a downlink head node.

When the access network device is the downlink head node, behavior of the access network device is similar to behavior of the user plane function network element when the user plane function network element is used as a downlink head node. Optionally, the method further includes: The access network device receives information about a fourth detection action, where the fourth detection action is used for the data flow. That the access network device performs in-situ flow information telemetry on the data flow of the terminal device includes: receiving a seventh data packet of the data flow, and performing, on the seventh data packet, a detection action indicated by the information about the fourth detection action.

Optionally, the seventh data packet is a seventh downlink data packet. The method further includes: The access network device generates a fourth detection rule based on the information about the fourth detection action, and sends an eighth downlink data packet to a next-hop node, where the eighth downlink data packet includes the fourth detection rule, and the fourth detection rule indicates an action of performing, by the next-hop node, in-situ flow information telemetry on the eighth downlink data packet.

The fourth detection rule is used to notify a next-hop node of a processing action, where the processing action includes one or more of the following content: coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, obtained information reporting, and the like. It should be understood that the content included in the processing action is merely an example for description, and this application is not limited thereto. The next-hop node may be a router, a switch, an access network device, another user plane function network element, or another transmission node. This is not limited.

According to a fourth aspect, a data flow detection method is provided, including: A control plane network element (or a chip in the control plane network element) generates first indication information, and sends the first indication information to a user plane network element, where the first indication information indicates the user plane function network element to perform in-situ flow information telemetry on a data flow of a terminal device. Compared with the conventional technology, in the data flow detection method in this embodiment of this application, the control plane network element sends the first indication information to the user plane function network element, so that the user plane function network element performs in-situ flow information telemetry based on the first indication information; and the control plane network element sends fifth indication information to the terminal device, so that the terminal device performs in-situ flow information telemetry based on the fifth indication information. In this way, user plane transmission can be quickly located, and accuracy of obtaining data plane information can be further improved.

The control plane network element may be replaced with a management plane network element (for example, OAM). In another implementation, the management plane network element may send the first indication information to the user plane network element.

The control plane network element may be a session management network element (for example, an SMF) or a policy control function network element (for example, a PCF).

Optionally, the method further includes: The control plane network element receives a data flow identifier from an application function network element or operation, administration and maintenance.

In a possible implementation, the method further includes: The control plane network element sends information about a first detection action to the user plane function network element, where the first detection action is used for the data flow (including an uplink data flow and a downlink data flow).

Optionally, the method further includes: The control plane network element sends first information to the user plane function network element, where the first information indicates that the user plane function network element is a downlink head node. In this way, the user plane function network element notifies a next-hop node of a first detection rule, so that the next-hop node also performs in-situ flow information telemetry.

In a possible implementation, the method further includes: The control plane network element sends second information to the user plane function network element, where the second information indicates that the user plane function network element is an uplink tail node. In this way, the user plane function network element determines to strip third indication information when sending an uplink data packet to the next-hop node.

According to a fifth aspect, a data flow detection method is provided, including: A control plane network element (or a chip in the control plane network element) generates fifth indication information, and sends the fifth indication information to a terminal device, where the fifth indication information indicates the terminal device to perform in-situ flow information telemetry on a data flow of the terminal device. Compared with the conventional technology, in the data flow detection method in this embodiment of this application, the control plane network element sends the fifth indication information to the terminal device, so that the terminal device performs in-situ flow information telemetry based on the fifth indication information. In this way, user plane transmission can be quickly located, and accuracy of obtaining data plane information can be further improved.

The control plane network element may be replaced with a management plane network element (for example, OAM). In another implementation, the management plane network element may send the fifth indication information to the terminal device.

In a possible implementation, the method further includes: The control plane network element sends information about a second detection action to the terminal device, where the second detection action is used for an uplink data flow.

Optionally, the method further includes: The control plane network element sends third information to the terminal device, where the third information indicates that the terminal device is an uplink head node. In this way, when sending an uplink data packet to the access network device, the terminal device adds an indication to the uplink data packet, to indicate the access network device to perform in-situ flow information telemetry.

Optionally, the method further includes: The control plane network element sends fourth information to the terminal device, where the fourth information indicates that the terminal device is a downlink tail node.

In the first aspect to the fifth aspect, the data flow may be a quality of service flow QoS, so that in-situ flow information telemetry at a QoS granularity can be implemented. Correspondingly, the first indication information includes a QoS flow identifier, so that the user plane function network element implements in-situ flow information telemetry at a QoS granularity. The fifth indication information includes the QoS flow identifier, so that the terminal device implements in-situ flow information telemetry at a QoS granularity.

In the first aspect to the fifth aspect, the data flow is a service flow, so that in-situ flow information telemetry at a service flow granularity can be implemented. Correspondingly, the first indication information includes a service flow identifier, so that the user plane function network element implements in-situ flow information telemetry at a service flow granularity. Correspondingly, the fifth indication information includes the service flow identifier, so that the terminal device implements in-situ flow information telemetry at a service flow granularity.

Optionally, the service flow identifier may be an identifier that can be identified by both a transport network and a cellular network, to implement collaborative detection by the transport network and the cellular network.

According to a sixth aspect, a service flow detection apparatus is provided, including modules or units configured to perform the method according to any possible implementation of the first aspect to the fifth aspect.

According to a seventh aspect, a service flow detection apparatus is provided, including a processor. The processor is coupled to a memory, and may be configured to execute instructions or data in the memory, to implement the method according to any possible implementation of the first aspect. Optionally, the apparatus further includes the memory. Optionally, the apparatus further includes a communication interface, and the processor is coupled to the communication interface.

In an implementation, the apparatus is a user plane function network element. When the communication apparatus is the user plane function network element, the communication interface may be a transceiver or an input/output interface.

In another implementation, the apparatus is a chip configured in a user plane function network element. When the communication apparatus is the chip configured in the user plane function network element, the communication interface may be an input/output interface.

Optionally, the transceiver may be a transceiver circuit. Optionally, the input/output interface may be an input/output circuit.

According to an eighth aspect, a service flow detection apparatus is provided, including a processor. The processor is coupled to a memory, and may be configured to execute instructions or data in the memory, to implement the method according to any possible implementation of the second aspect. Optionally, the apparatus further includes the memory. Optionally, the apparatus further includes a communication interface, and the processor is coupled to the communication interface.

In an implementation, the apparatus is a terminal device. When the communication apparatus is the terminal device, the communication interface may be a transceiver or an input/output interface.

In another implementation, the apparatus is a chip configured in a terminal device. When the communication apparatus is the chip configured in the terminal device, the communication interface may be an input/output interface.

Optionally, the transceiver may be a transceiver circuit. Optionally, the input/output interface may be an input/output circuit.

According to a ninth aspect, a service flow detection apparatus is provided, including a processor. The processor is coupled to a memory, and may be configured to execute instructions or data in the memory, to implement the method according to any possible implementation of the third aspect. Optionally, the apparatus further includes the memory. Optionally, the apparatus further includes a communication interface, and the processor is coupled to the communication interface.

In an implementation, the apparatus is an access network device. When the communication apparatus is the access network device, the communication interface may be a transceiver or an input/output interface.

In another implementation, the apparatus is a chip configured in the access network device. When the communication apparatus is the chip configured in the access network device, the communication interface may be an input/output interface.

Optionally, the transceiver may be a transceiver circuit. Optionally, the input/output interface may be an input/output circuit.

According to a tenth aspect, a service flow detection apparatus is provided, including a processor. The processor is coupled to a memory, and may be configured to execute instructions or data in the memory, to implement the method according to any possible implementation of the fourth aspect or the fifth aspect. Optionally, the apparatus further includes the memory. Optionally, the apparatus further includes a communication interface, and the processor is coupled to the communication interface.

In an implementation, the apparatus is a control plane network element. When the communication apparatus is the control plane network element, the communication interface may be a transceiver or an input/output interface.

In another implementation, the apparatus is a chip configured in a control plane network element. When the communication apparatus is the chip configured in the control plane network element, the communication interface may be an input/output interface.

Optionally, the transceiver may be a transceiver circuit. Optionally, the input/output interface may be an input/output circuit.

According to an eleventh aspect, a processor is provided, and includes an input circuit, an output circuit, and a processing circuit. The processing circuit is configured to: receive a signal by using the input circuit, and transmit a signal by using the output circuit, so that the processor performs the method according to any possible implementation of the first aspect to the fifth aspect.

In a specific implementation process, the processor may be one or more chips, the input circuit may be an input pin, the output circuit may be an output pin, and the processing circuit may be a transistor, a gate circuit, a trigger, any logic circuit, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a twelfth aspect, a processing apparatus is provided, including a processor and a memory. The processor is configured to: read instructions stored in the memory, receive a signal by using a receiver, and transmit a signal by using a transmitter, to perform the method according to any possible implementation of the first aspect to the fifth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, like a read-only memory (read-only memory, ROM). The memory and the processor may be integrated into one chip, or may be separately disposed in different chips. A type of the memory and a manner in which the memory and the processor are disposed are not limited in embodiments of this application.

It should be understood that, a related data exchange process like sending of indication information may be a process of outputting the indication information from the processor, and receiving of capability information may be a process of receiving the input capability information by the processor. Specifically, data output by the processor may be output to the transmitter, and input data received by the processor may be from the receiver. The transmitter and the receiver may be collectively referred to as a transceiver.

The processing apparatus in the twelfth aspect may be one or more chips. The processor in the processing apparatus may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in the memory. The memory may be integrated into the processor, or may be located outside the processor and exist independently.

According to a thirteenth aspect, a computer program product is provided. The computer program product includes a computer program (which may also be referred to as code or an instruction). When the computer program is run, a computer is enabled to perform the method according to any possible implementation of the first aspect to the fifth aspect.

According to a fourteenth aspect, a computer-readable storage medium is provided. The computer-readable storage medium stores a computer program (which may also be referred to as code or an instruction). When the computer program is run on a computer, the computer is enabled to perform the method according to any possible implementation of the first aspect to the fifth aspect.

According to a fifteenth aspect, a communication system is provided, including one or more of the user plane function network element, the control plane network element, the management plane network element, the access network device, and the terminal device.

### BRIEF DESCRIPTION OF DRAWINGS

FIG. 1 is a schematic diagram of a network architecture applicable to a method according to an embodiment of this application;
FIG. 2 is a schematic diagram of another network architecture applicable to a method according to an embodiment of this application;
FIG. 3 is an example of an application architecture according to an embodiment of this application;
FIG. 4 is a schematic interaction diagram of a data flow detection method according to an embodiment of this application;
FIG. 5 is a schematic interaction diagram of another data flow detection method according to an embodiment of this application;
FIG. 6 is a schematic interaction diagram of another data flow detection method according to an embodiment of this application;
FIG. 7A and FIG. 7B are a flowchart of an example according to an embodiment of this application;
FIG. 8A, FIG. 8B, and FIG. 8C are a flowchart of another example according to an embodiment of this application;
FIG. 9 is a schematic diagram of a data flow detection apparatus according to an embodiment of this application; and
FIG. 10 is a schematic diagram of a structure of another data flow detection apparatus according to an embodiment of this application.

### DESCRIPTION OF EMBODIMENTS

The following describes the technical solutions of this application with reference to the accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5^{th} generation (5^{th} generation, 5G) system, new radio (new radio, NR), or another evolved communication system.

The technical solutions provided in this application may be further applied to a future communication system, for example, a sixth generation mobile communication system. This is not limited in this application.

The technical solutions provided in this application may be further applied to machine type communication (machine type communication, MTC), long term evolution-machine (long term evolution-machine, LTE-M), a device-to-device (device-to-device, D2D) network, a machine-to-machine (machine-to-machine, M2M) network, an Internet of things (Internet of things, IoT) network, or another network. The IoT network may include, for example, an Internet of vehicles. Communication modes in an Internet of vehicles system are collectively referred to as vehicle to X (vehicle to X, V2X, where X may represent anything). For example, V2X may include vehicle to vehicle (vehicle to vehicle, V2V) communication, vehicle to infrastructure (vehicle to infrastructure, V2I) communication, vehicle to pedestrian (vehicle to pedestrian, V2P) communication, or vehicle to network (vehicle to network, V2N) communication.

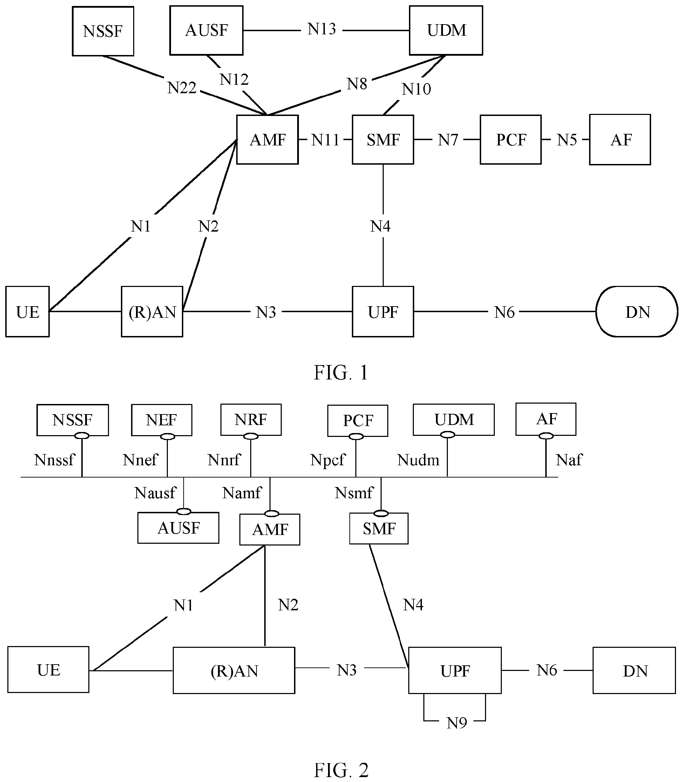

FIG. 1 is a schematic diagram of a network architecture applicable to a method according to an embodiment of this application. As shown in FIG. 1, the network architecture is, for example, a 5G system (the 5^{th} generation system, 5GS) defined in the 3^{rd} Generation Partnership Project (3^{rd} Generation Partnership Project, 3GPP) protocol TS23.501. The network architecture may be divided into two parts: an access network (access network, AN) and a core network (core network, CN). The access network may be used to implement functions related to radio access, and the core network mainly includes the following several key logical network elements: an access and mobility management function (access and mobility management function, AMF), a session management function (session management function, SMF), a user plane function (user plane function, UPF), a policy control function (policy control function, PCF), and unified data management (unified data management, UDM).

The following briefly describes network elements shown in FIG. 1.
1. User equipment (user equipment, UE) may be referred to as a terminal device, an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity to a user, for example, a handheld device or vehicle-mounted device with a wireless connectivity function. Currently, some terminals are, for example, a mobile phone (mobile phone), a tablet computer, a notebook computer, a palmtop computer, a mobile Internet device (mobile Internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), customer premises equipment (customer premises equipment, CPE), a hand-held device or a computing device that has a wireless communication function or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example, and not limitation, in embodiments of this application, the terminal device may alternatively be a wearable device. The wearable device may also be referred to as a wearable intelligent device, and is a general term for wearable devices such as glasses, gloves, watches, clothes, and shoes that are developed by applying wearable technologies in intelligent designs of daily wear. The wearable device is a portable device that can be directly worn on a body or integrated into clothes or an accessory of a user. The wearable device is not only a hardware device, but also implements a powerful function through software support, data exchange, and cloud interaction. In a broad sense, wearable intelligent devices include full-featured and large-size devices, such as smart watches or smart glasses, that can implement complete or partial functions without depending on smartphones, and devices, such as various smart bands or smart jewelry for monitoring physical symptoms, that focus on only one type of application function and need to work with other devices such as smartphones.

In addition, in embodiments of this application, the terminal device may alternatively be a terminal device in an Internet of things (Internet of things, IoT) system. IoT is an important part of future development of information technologies. A main technical feature of the IoT is connecting things to a network by using a communication technology, to implement an intelligent network for human-machine interconnection and thing-thing interconnection.

2. An access network provides a network access function to user equipment, and can use transmission tunnels of different quality based on user levels and service requirements. Different access networks may use different access technologies. Currently, there are two types of radio access technologies: a 3GPP access technology (for example, a radio access technology used in a 3G, 4G, or 5G system) and a non-3GPP (non-3GPP) access technology. The 3GPP access technology is an access technology that complies with a 3GPP standard specification. For example, an access network device in the 5G system is referred to as a next generation node base station (next generation node base station, gNB). The non-3GPP access technology is an access technology that does not comply with a 3GPP standard specification, for example, an air interface technology represented by an access point (access point, AP) in wireless fidelity (wireless fidelity, Wi-Fi).

An access network that implements a network access function based on a wireless communication technology may be referred to as a radio access network (radio access network, RAN). The radio access network can manage radio resources, provide an access service to a terminal device, and further complete forwarding of a control signal and user data between a terminal and a core network.

For example, the radio access network may include but is not limited to: a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an AP in a Wi-Fi system, a radio relay node, a radio backhaul node, a transmission point (transmission point, TP), or a transmission and reception point (transmission and reception point, TRP). Alternatively, the radio access network may include a gNB or a transmission point (TRP or TP) in a 5G (for example, NR) system, or one antenna panel or a group of antenna panels (including a plurality of antenna panels) of a base station in the 5G system. Alternatively, the radio access network may include a network node constituting a gNB or a transmission point, for example, a baseband unit (BBU), a distributed unit (distributed unit, DU), or a base station in a next-generation 6G communication system. A specific technology and a specific device form that are used by a radio access network device are not limited in embodiments of this application.

The access network may provide a service to a cell. The terminal device may communicate with the cell by using a transmission resource (for example, a frequency domain resource or a spectrum resource) allocated by the access network device.

3. An AMF is mainly used for mobility management, access management, and the like, such as user location update, registration of a user with a network, and user handover. The AMF may be further used to implement a function other than session management in a mobility management entity (mobility management entity, MME), for example, a lawful interception function or an access authorization (or authentication) function.

4. An SMF is mainly used for session management, Internet protocol (Internet Protocol, IP) address allocation and management of UE, manageable user plane function selection, a termination point of a policy control or charging function interface, downlink data notification, and the like. In embodiments of this application, the SMF is mainly responsible for session management in a mobile network, for example, session establishment, modification, and release. Specific functions may include, for example, assigning an IP address to a terminal device, and selecting a UPF that provides a packet forwarding function.

5. A UPF is a data plane gateway. The UPF may be used to perform packet routing and forwarding, quality of service (quality of service, QoS) processing on user plane data, and the like. User data may be accessed to a data network (data network, DN) through the UPF. In embodiments of this application, the UPF may be used to implement functions of a user plane gateway.

6. A data network (DN) is an operator network for providing a data service to a user, for example, a network of an operator service, the Internet (Internet), a third-party service network, or an IP multi-media service (IP multi-media service) network.

7. An authentication server function (authentication server function, AUSF) is mainly used for user authentication and the like.

8. A network exposure function (network exposure function, NEF) is used to securely open a service, a capability, and the like provided by a 3GPP network function to the outside.

9. A network repository function (network function (NF) repository function, NRF) is used to store a network function entity and description information of a service provided by the network function entity, and support service discovery, network element entity discovery, and the like.

10. A policy control function (PCF) is a unified policy framework for guiding network behavior, and provides policy rule information and the like to a control plane function network element (for example, an AMF or an SMF).

11. Unified data management (UDM) is used to store subscriber data such as subscription information and authentication/authorization information.

12. An application function (application function, AF) is responsible for providing a service to a 3GPP network, for example, affecting service routing and interacting with a PCF to perform policy control.

In the network architecture shown in FIG. 1, network elements may communicate with each other through interfaces shown in the figure. As shown in the figure, the N1 interface is a reference point between a terminal device and the AMF; the N2 interface is a reference point of the RAN and the AMF, and is used to send a non-access stratum (non-access stratum, NAS) message and the like; the N3 interface is a reference point between the RAN and the UPF, and is used to transmit user plane data and the like; the N4 interface is a reference point between the SMF and the UPF, and is used to transmit information such as tunnel identifier information of an N3 connection, data buffer indication information, a downlink data notification message, and the like; the N5 interface is a reference point between the PCF and the AF; the N6 interface is a reference point between the UPF and the DN, and is used to transmit user plane data and the like; the N7 interface is a reference point between the SMF and the PCF; the N8 interface is a reference point between the AMF and the UDM; and the N11 interface is a reference point between the AMF and the SMF. Relationships between other interfaces and network elements are shown in FIG. 1. For brevity, details are not described herein.

In addition, some interfaces in FIG. 1 may be implemented through a service-oriented interface. For example, as shown in FIG. 2, the AMF may interact with another network function through a service-oriented interface Namf; the NSSF may interact with another network function through a service-oriented interface Nnssf; the NEF may interact with another network function through the service-oriented interface Nnef; the NRF may interact with another network function through a service-oriented interface Nnrf; the PCF may interact with another network function through a service-oriented interface Npcf; the UDM may interact with another network function through a service-oriented interface Nudm; the AF may interact with another network function through a service-oriented interface Naf; the SMF may interact with another network function through a service-oriented interface Nsmf; and the AUSF may interact with another network function through a service-oriented interface Nausf.

It should be understood that the foregoing network architecture applied to embodiments of this application is merely an example of a network architecture described from the perspective of a conventional point-to-point architecture and a service architecture, and a network architecture applicable to embodiments of this application is not limited thereto. Any network architecture that can implement functions of the foregoing network elements is applicable to embodiments of this application.

It should be further understood that the AMF, the SMF, the UPF, the network slice selection function (network slice selection function, NSSF) network element, the NEF, the AUSF, the NRF, the PCF, and the UDM shown in FIG. 1 and FIG. 2 may be understood as network elements for implementing different functions in a core network, for example, may be combined into a network slice as required. These core network elements may be independent devices, or may be integrated into a same device to implement different functions. Specific forms of the foregoing network elements are not limited in this application.

It should be further understood that the foregoing names are defined merely for distinguishing between different functions, and should not constitute any limitation on this application. This application does not exclude a possibility of using other names in the 5G network and another future network. For example, in a 6G network, some or all of the foregoing network elements may still use terms in 5G, may use other names. Names of interfaces between the foregoing network elements in FIG. 1 are merely examples, and the interfaces may have other names during specific implementation. This is not specifically limited in this application. In addition, names of messages (or signaling) transmitted between the foregoing network elements are merely examples, and do not constitute any limitation on functions of the messages.

It may be understood that, in embodiments of this application, related descriptions about sending a message, information, or data by a network element A to a network element B, and receiving, by the network element B, the message, information, or data from the network element A are intended to describe a network element to which the message, information, or data is to be sent, but does not constitute limitation on whether the message, information, or data is to be directly sent or indirectly sent through another network element.

It may be further understood that, in embodiments of this application, descriptions such as "when ...", "in the case of...", and "if" all mean that a device performs corresponding processing in an objective case, are not intended to limit time, do not mean that the device is required to have a determining action during implementation, and do not mean any other limitation.

To facilitate understanding of embodiments of this application, the terms used in this application are first briefly described.

In-situ operation administration and maintenance (in-situ operations administration and maintenance, IOAM) is a network traffic detection technology that can sense and measure a traffic forwarding path and forwarding quality by adding operation administration and maintenance (operations administration and maintenance, OAM) information to service traffic hop by hop. Compared with a conventional traffic detection technology, the IOAM technology can measure real user traffic information (a packet loss rate and latency). An OAM instruction and information are embedded into user traffic to implement per-packet detection and obtain comprehensive, real-time, and accurate data plane information (for example, a timestamp, a queue depth, queuing latency, buffer occupation, and a forwarding path).

An in-situ flow information telemetry (in-situ flow information telemetry, IFIT) is also an in-situ flow detection technology. Compared with the IOAM technology, the IFIT technology is more compatible, supports more protocols (for example, Internet protocol version 6 (Internet protocol version 6, IPv6), Internet protocol version 4 (Internet protocol version 4, IPv4), and multi-protocol label switching (multi-protocol label switching, MPLS)), and supports an intermediate node to directly report detection information, to reduce network forwarding overheads.

A current detection mechanism is applicable to limited scenarios and cannot implement end-to-end detection. As a result, it is time-consuming to locate end-to-end user-plane transmission, and a fast service recovery requirement of a customer cannot be met.

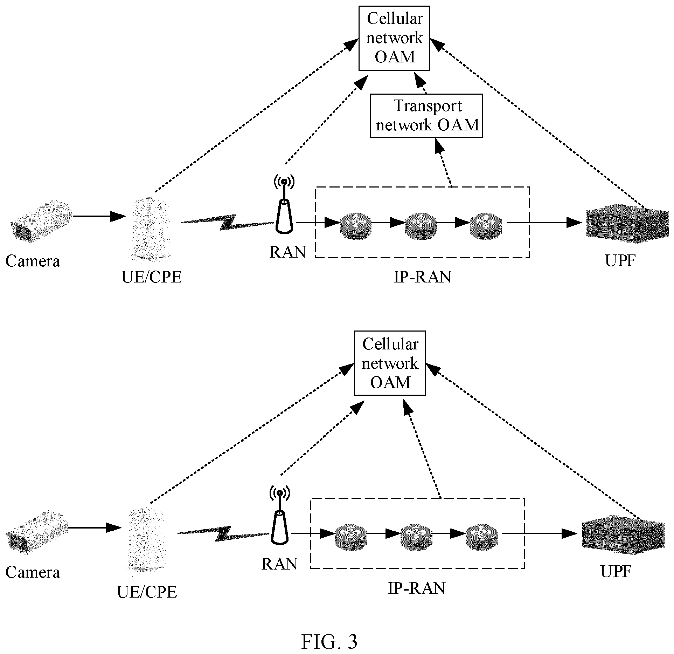

Before embodiments of this application are described, an application architecture of embodiments of this application is first described with reference to an example in FIG. 3.

As shown in a first part in FIG. 3, the architecture includes a camera, UE/CPE, RAN transport network operation, administration and maintenance (operation, administration and maintenance, OAM), cellular network OAM, and a UPF. A transport network technology used between the RAN and the UPF may be an IP RAN. The architecture may be applied to a scenario in which a core network and a transport network perform layered detection. It is assumed that the camera performs communication through the UE/CPE, and the RAN communicates with the UPF through the IP RAN. In this case, an actual data transmission path is camera-UE/CPE-RAN-IPRAN-UPF. Uplink video detection data traffic is used as an example. An IP packet of the camera is encapsulated on the UE/CPE side by using an access network protocol (as a PDU unit). Unified descriptions are provided herein. The access network protocol in this application may be one of the following protocols: an SDAP protocol, a PDCP protocol, a MAC layer protocol, an RLC layer protocol, or an RRC layer protocol.

In this embodiment of this application, the UE/CPE adds a first field to an access network protocol header (where the first field may include one or more fields), and write a detection indication, a reporting trigger condition, and the like into the first field. Unified descriptions are provided herein. The first field in this application may also be referred to as a detection field, and the first field may be some or all fields in an in-situ flow information telemetry protocol (for example, IFIT or IOAM protocol). When "first field" appears in the following, details about meaning of "first field" are not described again.

For example, some or all fields in an IOAM or IFIT protocol header may be used as the first field or the detection field in the access network protocol header.

For example, when a packet length needs to be detected, the UE/CPE reports information such as the packet length, a flow identifier, and a period to a monitoring network element (where the monitoring network element may be specifically a core network element or operation, administration and maintenance OAM, and the core network element may be an SMF, an NWDAF, a PCF, or the like). The UE/CPE may also write the obtained detection information into the first field, and transmit the detection information to a next-hop node. After receiving an access network protocol packet, the RAN writes a first field in the access network protocol packet into a GTP-U protocol header, and transmits a GTP-U protocol packet including the first field to the UPF network element. The RAN network element and the UPF network element obtain the detection information based on the first field, and report the detection information to the monitoring network element based on a trigger event. After collecting detection information, for example, packet length information, reported by each node, the monitoring network element can determine a node at which a service packet is segmented, to trigger an alarm in time.

It may be understood that an in-situ flow information telemetry technology (for example, an IOAM/IFIT technology) may also be used in an underlying transport network. However, in this scenario, detection of the core network and detection of the transport network are not collaborative and do not affect each other.

"Not collaborative" means that independent in-situ flow information telemetry methods are used in the cellular network and the transport network. The cellular network may add a first field by using an existing protocol header or a new protocol layer, and transfer the first field to a next-hop cellular network node. When cellular network data is carried in the transport network for transmission, for example, the RAN transmits cellular data to a UPF node through the transport network, the transport network does not sense a field added by the cellular network.

As shown in a second part in FIG. 3, the architecture includes a camera, UE/CPE, a RAN, cellular network OAM, and a UPF. A transport network technology used between the RAN and the UPF may be an IP RAN. The architecture may be applied to a scenario in which a core network and a transport network perform integrated detection. In this scenario, the core network and the transport network perform collaborative detection. Different from the preceding scenario, in this scenario, the RAN needs to write a field into a header of a transport layer protocol (another transport layer protocol, for example, an IPv6 protocol or an IPv4-enhanced (IPv4-enhanced, IPv4-en) protocol, SRv6, an Ethernet protocol, or a GPRS tunneling protocol for user plane (GPRS tunneling protocol for user plane, GTP-U), which is not limited herein). In this way, when a data packet passes through the transport network, the transport network can also identify the field and perform corresponding processing. SRv6 is a next-generation IP bearer protocol based on IPv6 and source routing (source routing). The GTP-U is used to exchange user data between a radio access network (RAN) and the core network (CN).

"Collaborative" means that the transport network senses a field added by the cellular network, and a transmission node (for example, a router) in the transport network may obtain corresponding detection information based on an indication of the field, subsequently directly report the detection information or write the detection information into the field, and transfer the detection information to a next-hop node.

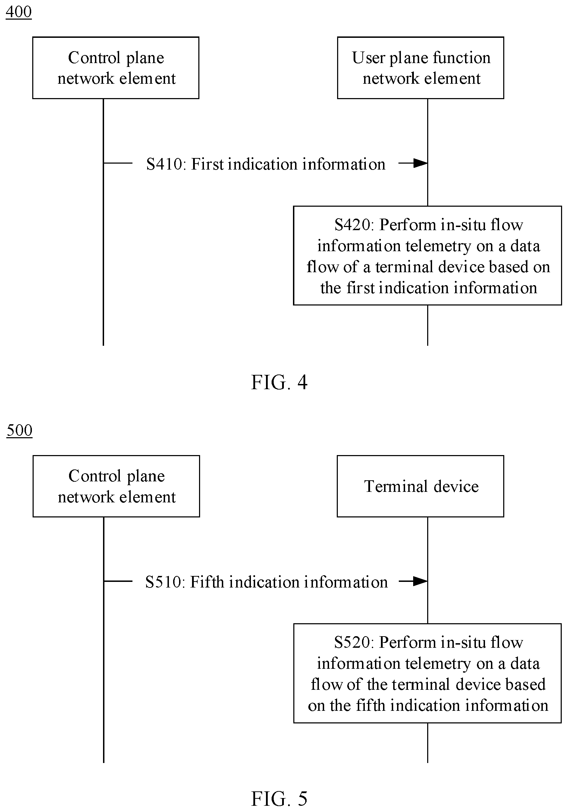

With reference to FIG. 4 to FIG. 8C, the following describes in detail a data flow detection method according to an embodiment of this application.

FIG. 4 is a schematic interaction diagram of a data flow detection method 400 according to an embodiment of this application. For example, a user plane function network element in FIG. 4 may be a UPF. It may be understood that a message or information included in the interaction process in FIG. 4 may be carried in an existing message or signaling, or may be a newly defined message or signaling. This is not specifically limited. As shown in FIG. 4, the method 400 includes the following steps.

S410: A control plane network element sends first indication information to a user plane function network element, where the first indication information indicates the user plane function network element to perform in-situ flow information telemetry on a data flow of a terminal device. Correspondingly, the user plane function network element receives the first indication information from the control plane network element.

Unified descriptions are provided herein. The control plane network element may be a session management network element (for example, an SMF) or a policy control function network element (for example, a PCF).

Unified descriptions are provided herein. The term "detection" in this specification may be understood as "monitoring".

Optionally, the first indication information may be carried in a detection request.

The first indication information may explicitly indicate the user plane function network element to perform in-situ flow information telemetry on the data flow of the terminal device. An "explicit indication" manner means that an information element indicates the user plane function network element to perform in-situ flow information telemetry on the data flow of the terminal device. For example, the first indication information includes a first field (or a detection field), for example, an IFIT/IOAM indication or an IFIT/IOAM field.

Alternatively, the first indication information may implicitly indicate the user plane function network element to perform in-situ flow information telemetry on the data flow of the terminal device. An "implicit indication" manner means that the first indication information includes information about a detection action (or referred to as a processing action). To be specific, if the user plane function network element receives the information about the processing action sent by the control plane network element, the user plane function network element performs in-situ flow information telemetry on the data flow of the terminal device. Unified descriptions are provided herein. The detection action includes but is not limited to the following content: coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, and obtained information reporting. It should be understood that the content included in the processing action is merely an example for description, and this application is not limited thereto.

Unified descriptions are provided herein. For the control plane network element, the control plane network element may determine, based on one or more of the following trigger conditions, to deliver an in-situ flow information telemetry indication or policy: a trigger condition 1, where the control plane network element determines, based on subscription information, that in-situ flow information telemetry needs to be performed; a trigger condition 2, where the control plane network element receives a request message sent by the terminal device, and the request message is used to request to detect a specific QoS flow or a service flow; and a trigger condition 3, where the control plane network element performs in-situ flow information telemetry based on an operator policy. It may be understood that the foregoing trigger conditions are merely examples for description, and this application is not limited thereto.

It may be understood that, for the trigger condition 1 and the trigger condition 3, the control plane network element may determine an in-situ flow information telemetry granularity (for example, a QoS flow granularity or a service flow granularity).

For example, for the trigger condition 2, the request message sent by the terminal device may be a session establishment request message or a session modification message. Optionally, the request message sent by the terminal device may carry detection granularity indication information (for example, indicating a detection QoS granularity or a service flow granularity). If the request message carries the detection granularity indication information, the request message may also carry a QoS flow identifier, a service flow identifier, or other information that can identify a QoS flow/a service flow.

For example, before S410, the control plane network element receives the request message sent by the terminal device.

That the control plane network element delivers the in-situ flow information telemetry indication or policy includes one or more of the following steps: sending the first indication information to the user plane function network element (that is, S410); sending fifth indication information to the terminal device (S510 in the following method 500); and sending eighth indication information to an access network device (S610 in the following method 600). It should be understood that the foregoing step of delivering the in-situ flow information telemetry indication or policy by the control plane network element is merely an example for description, and this application is not limited thereto.

The control plane network element may alternatively be replaced with a management plane network element (for example, OAM).

In another implementation, that the management plane network element delivers the in-situ flow information telemetry indication or policy includes one or more of the following steps: sending the first indication information to the user plane network element; sending fifth indication information to the terminal device; and sending eighth indication information to an access network device. It should be understood that the foregoing step of delivering the in-situ flow information telemetry indication or policy by the management plane network element is merely an example for description, and this application is not limited thereto.

S420: The user plane function network element performs in-situ flow information telemetry on the data flow of the terminal device based on the first indication information. In other words, the user plane function network element activates or enables an in-situ flow information telemetry function based on the first indication information.

Unified descriptions are provided herein. "In-situ flow information telemetry" may include one or more of the following: identifying an anomaly based on real-time service traffic, performing detection based on actual user traffic, implementing per-packet detection, and obtaining more comprehensive data plane information. This can improve comprehensiveness, timeliness, and accuracy of obtaining the data plane information.

Optionally, the data flow of the terminal device is a quality of service QoS flow, and the first indication information includes a QoS flow identifier. In this way, the user plane function network element can perform in-situ flow information telemetry on the QoS flow based on the QoS flow identifier, so that detection at the QoS flow granularity can be implemented.

Optionally, the data flow of the terminal device is a service flow, and the first indication information includes a service flow identifier (Flow ID). In this way, the user plane function network element can perform in-situ flow information telemetry on the service flow based on the service flow identifier, so that detection at a finer granularity, namely, detection at the service flow granularity, can be implemented.

Optionally, unified descriptions are provided herein. The service flow identifier may be generated by using a 5-tuple of a detected service flow (where for example, a unique identifier is generated by using a Hash function).

Optionally, if the data flow of the terminal device is the service flow, the first indication information further includes a packet filter corresponding to the service flow identifier (Flow ID).

Optionally, unified descriptions are provided herein. The service flow identifier may be a global service flow identifier that can be identified by both a cellular network and a transport network. For example, an AF or operation, administration and maintenance provides the global service flow identifier to the session management network element. In this way, the cellular network and the transport network can implement collaborative detection by introducing the global service flow identifier.

In this embodiment of this application, the user plane function network element receives the first indication information, and performs in-situ flow information telemetry on the data flow of the terminal device based on the first indication information. In this way, detection is performed based on a real data packet, and additional data traffic does not need to be simulated, so that a detection result is more timely and accurate. Through per-packet detection, a granularity is finer and a result is more accurate. In addition, a plurality of types of detection data information may be defined in the first field, to obtain more comprehensive information. It is time-consuming and inaccurate to locate user plane transmission by using a current in-situ flow information telemetry technology. Compared with the conventional technology, in the data flow detection method in this embodiment of this application, user plane transmission can be quickly located, and accuracy of obtaining the data plane information can be further improved.

In addition, according to the data flow detection method in this embodiment of this application, the user plane network element can independently perform detection based on indication information, to reduce direct control of the control node, and improve timeliness of obtaining the data plane information.

Optionally, the method 400 further includes: The user plane function network element receives information about a first detection action, where the first detection action is used for the data flow (which may be a downlink data flow or an uplink data flow, which is not limited). That the user plane function network element performs in-situ flow information telemetry on the data flow of the terminal device includes: The user plane function network element receives a first data packet of the data flow, and performs, on the first data packet, a detection action indicated by the information about the first detection action. Herein, the first data packet may be an uplink data packet or a downlink data packet. This is not limited in this application.

The first detection action includes one or more of the following processing actions: coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, obtained information reporting, and the like. It should be understood that the content included in the processing action is merely an example for description, and this application is not limited thereto.

The user plane function network element may be a downlink head node, an uplink tail node, or an intermediate node in a detecting network (for example, a network including a transport network and/or a cellular network). Correspondingly, the user plane function network element has different processing behavior. Descriptions are separately provided below.

In a possible implementation, the user plane function network element is a downlink head node.

For example, the first data packet is a first downlink data packet. Optionally, the method 400 further includes: The user plane function network element generates a first detection rule based on the information about the first detection action, and sends a second downlink data packet to a next-hop node, where the second downlink data packet includes the first detection rule, and the first detection rule indicates an action of performing, by the next-hop node, in-situ flow information telemetry on the second downlink data packet. The next-hop node may be an access network device, a router, or a switch, or may be another user plane function network element or another transmission node. This is not limited.

For example, in downlink transmission, when the user plane function network element is a head node, the user plane function network element receives the first downlink data packet, performs, on the first downlink data packet, the action indicated by the information about the first detection action, and configures the first detection rule (or a monitoring rule) based on the information about the first detection action. Then, the user plane function network element sends the second downlink data packet to the next-hop node. In other words, when the user plane function network element is the downlink head node, in addition to performing in-situ flow information telemetry based on the information about the first detection action, the user plane function network element further needs to notify the next-hop node of the first detection rule, so that the next-hop node also performs in-situ flow information telemetry.

Optionally, the second downlink data packet carries second indication information, and the second indication information indicates the next-hop node to perform in-situ flow information telemetry on the second downlink data packet. It should be understood that the second downlink data packet may include both the first detection rule and the second indication information. Alternatively, the second downlink data packet includes the first detection rule. Alternatively, the second downlink data packet includes the second indication information.

The second downlink data packet may be based on an IPv6 protocol, an IPv4 protocol (for example, an enhanced IPv4-en protocol), an SRV6 protocol, an Ethernet protocol, a GTP-U protocol, or the like. In other words, the second downlink data packet may be an IPv6 packet, an IPv4 packet, an SRV6 packet, an Ethernet packet, a GTP-U protocol packet, or the like.

For example, the user plane function network element generates a first field (where for example, as described above, the first field is used for in-situ flow information telemetry, and may be all or some fields in a protocol header of the IFIT/IOAM field) and encapsulates the first field in a GTP-U header. The second downlink data packet is a GTP-U packet, and the second indication information may be implemented based on the first field.

For example, the user plane function network element generates a first field, and writes the first field into the IPv6 or IPv4 protocol (for example, an enhanced IPv4-en protocol header), and the second downlink data packet is an IPv6 or IPv4 protocol packet. In this way, an underlying transport network can also obtain the first field or identify a detection indication, and can perform in-situ flow information telemetry based on the first field, to achieve an objective of collaborative detection with the transport network.

It is assumed that the next-hop node of the user plane function network element is the access network device. In a possible implementation, a first field between the user plane function network element and the access network device, namely, the second indication information, may be placed at an existing protocol layer, for example, a GTP-U protocol layer. In another possible implementation, a first field between the user plane function network element and the access network device, namely, the second indication information, may alternatively be placed in a new protocol header. For example, a protocol layer may be added between a UPF and a RAN.

In a possible implementation, optionally, if the data flow is a service flow, the user plane function network element may write a flow ID into a GTP-U protocol layer or a new protocol layer between a UPF and a RAN. Specifically, the user plane function network element may write, into a GTP-U protocol layer field or a new protocol layer field, a flow ID corresponding to a packet filter in a packet detection rule (packet detection rule, PDR). In other words, when the user plane function network element is the downlink head node, the user plane function network element can write the flow ID into the GTP-U protocol layer field or the new protocol layer field. In this way, after receiving the field, the next-hop node may identify, based on the flow ID, a service flow that needs to be detected.

In a possible implementation, optionally, if the data flow is a service flow, the user plane function network element may generate a dynamic flow identifier based on a flow ID, and the user plane function network element may write the dynamic flow identifier into a GTP-U protocol layer or a new protocol layer between a UPF and a RAN. Specifically, the user plane function network element may write, into a GTP-U protocol layer field or a new protocol layer field, a flow ID corresponding to a packet filter in a PDR. In other words, when the user plane function network element is the downlink head node, the user plane function network element can write the dynamic flow identifier into the GTP-U protocol layer field or the new protocol layer field. In this way, after receiving the field, the next-hop node may identify, based on the dynamic flow identifier, a service flow that needs to be detected.

The user plane function network element may learn, based on an indication of the session management network element, whether the user plane function network element is the downlink head node.

Optionally, the method 400 further includes: The session management network element sends first information to the user plane function network element, where the first information indicates that the user plane function network element is the downlink head node. Correspondingly, the user plane function network element receives the first information.

The user plane function network element may learn, based on the first information sent by the session management network element, that the user plane function network element is the downlink head node. Optionally, the first information may be implemented by using one bit. For example, when a value of the bit is 0, it indicates that the user plane function network element is not the downlink head node; or when a value of the bit is 1, it indicates that the user plane function network element is the downlink head node. It should be understood that the examples herein are merely for ease of understanding, and constitute no limitation on embodiments of this application.

For the session management network element, the session management network element may determine, in different manners, that the user plane function network element is the downlink head node. Manner 1: The session management network element locally configures the user plane function network element as the downlink head node. Manner 2: The session management network element learns, based on an operator policy, that the user plane function network element is the downlink head node. Manner 3: The session management network element learns, based on information sent by the AF (where the information indicates that the user plane function network element is the downlink head node), that the user plane function network element is the downlink head node.

It should be understood that the head node is a starting node that supports an in-situ flow information telemetry technology (for example, an IFIT/IOAM protocol). Herein, an example in which the user plane function network element is the downlink head node is used for description, but the downlink head node is not limited to the starting node. For example, the downlink head node may alternatively be a router or a switch that carries N6.

In a possible implementation, the user plane function network element is an uplink tail node. The first data packet is a first uplink data packet. Correspondingly, the first detection action is used for an uplink data flow. The user plane function network element performs, on the first uplink data packet, a detection action indicated by the information about the first detection action. The first uplink data packet carries third indication information, and the third indication information indicates the user plane function network element to perform in-situ flow information telemetry. The user plane function network element sends a second uplink data packet to a next-hop node, where the second uplink data packet does not include the third indication information.

The first uplink data packet may be based on an IPv6 protocol, an IPv4 protocol (for example, an enhanced IPv4-en protocol), an SRV6 protocol, an Ethernet protocol, a GTP-U protocol, or the like. In other words, the first uplink data packet may be an IPv6 packet, an IPv4 packet, an SRV6 packet, an Ethernet packet, a GTP-U packet, or the like.

The second uplink data packet may be based on an IPv6 protocol, an IPv4 protocol (for example, an enhanced IPv4-en protocol), an SRV6 protocol, an Ethernet protocol, a GTP-U protocol, or the like. In other words, the second uplink data packet may be an IPv6 packet, an IPv4 packet, an SRV6 packet, an Ethernet packet, a GTP-U protocol packet, or the like.

Optionally, the first uplink data packet is a GTP-U packet, and the second uplink data packet is a GTP-U packet. Alternatively, optionally, the first uplink data packet is an IPv6 packet or an IPv4 packet, and the second uplink data packet is an IPv6 packet or an IPv4 packet.

For example, it is assumed that the first uplink data packet is the GTP-U packet, and the second uplink data packet is the GTP-U packet. The first uplink data packet includes the third indication information, and the third indication information may be implemented based on a first field. For example, the first field is an IFIT/IOAM field, and a GTP-U packet header carries the IFIT/IOAM field. In uplink transmission, when the user plane function network element is a tail node, the user plane function network element receives the GTP-U packet from the access network device, and then performs in-situ flow information telemetry (or executes a specific detection instruction) based on the first field carried in the GTP-U packet. After performing in-situ flow information telemetry on the GTP-U packet, the user plane function network element sends the second uplink data packet, namely, the GTP-U packet, to the next-hop node. When sending the second uplink data packet to the next-hop node, the user plane function network element needs to strip the first field. For example, the user plane function network element sends, to a DN through an N6 interface, a GTP-U packet off which the first field is stripped. In other words, if the user plane function network element is the uplink tail node, the user plane function network element needs to strip the first field before sending the uplink data packet to the next-hop node.

The user plane function network element may learn, based on an indication of the session management network element, whether the user plane function network element is the uplink tail node.

Optionally, the method 400 further includes: The user plane function network element receives second information from the session management network element, where the second information indicates that the user plane function network element is the uplink tail node.

The user plane function network element may learn, based on the second information sent by the session management network element, that the user plane function network element is the uplink tail node. Optionally, the second information may be implemented by using one bit. For example, when a value of the bit is 0, it indicates that the user plane function network element is not the uplink tail node; or when a value of the bit is 1, it indicates that the user plane function network element is the uplink tail node. It should be understood that the examples herein are merely for ease of understanding, and constitute no limitation on embodiments of this application.

For the session management network element, the session management network element may determine, in different manners, that the user plane function network element is the uplink tail node. Manner 1: The session management network element locally configures the user plane function network element as the uplink tail node. Manner 2: The session management network element learns, based on an operator policy, that the user plane function network element is the uplink tail node. Manner 3: The session management network element learns, based on information sent by the AF (where the information indicates that the user plane function network element is the uplink tail node), that the user plane function network element is the uplink tail node.

It should be understood that the tail node is a terminating node that supports an in-situ flow information telemetry protocol. Herein, an example in which the user plane function network element is the uplink tail node is used for description, but the uplink tail node is not limited to the terminating node. For example, the uplink tail node may alternatively be a router or a switch that carries N6.

In a possible implementation, the user plane function network element is an intermediate node. That the user plane function network element performs in-situ flow information telemetry on the data flow of the terminal device includes: The user plane function network element receives the first data packet of the data flow, where the first data packet carries fourth indication information, and the fourth indication information indicates the user plane function network element to perform in-situ flow information telemetry on the first data packet. The user plane function network element sends a second data packet to a next-hop node, where the second data packet carries fifth indication information, and the fifth indication information indicates the next-hop node to perform in-situ flow information telemetry on the second data packet.

For example, the next-hop node may be an I-UPF, a switch, a router, an access network device, or the like.

The intermediate node may be understood as a node other than a terminating node and a starting node in nodes that support an in-situ flow information telemetry technology (for example, an IFIT/IOAM protocol). It should be understood that an example in which the intermediate node is the user plane function network element is used for description herein. However, this application is not limited thereto. For example, a router, a switch, or an access network device may alternatively be an intermediate node.

Specifically, if the user plane function network element is the intermediate node (in downlink transmission or uplink transmission), the user plane function network element performs in-situ flow information telemetry based on a first field (for example, the fourth indication information) carried in the received first data packet, and when sending the second data packet to the next-hop node, the user plane function network element adds a first field (for example, the fifth indication information) to the second data packet, to indicate the next-hop node to perform in-situ flow information telemetry. Compared with an implementation in which the user plane function network element is the uplink tail node, in this implementation, the user plane function network element does not need to strip the first field off the data packet.

The foregoing describes, from a perspective of the user plane function network element, some embodiments in which the terminal device performs in-situ flow information telemetry.

With reference to FIG. 5, the following describes, from a perspective of a terminal device, some embodiments in which the terminal device performs in-situ flow information telemetry. It should be understood that some features in the following embodiments may be combined with the foregoing embodiments based on a requirement. In addition, explanations or descriptions of terms in the embodiments may be mutually referred to or explained in the embodiments. This is not limited.

FIG. 5 is a schematic interaction diagram of another data flow detection method 500 according to an embodiment of this application. It may be understood that a message or information included in the interaction process in FIG. 5 may be carried in an existing message or signaling, or may be a newly defined message or signaling. This is not specifically limited. As shown in FIG. 5, the method 500 includes the following steps.

S510: A control plane network element (or a management plane network element) sends fifth indication information to a terminal device, where the fifth indication information indicates the terminal device to perform in-situ flow information telemetry on a data flow of the terminal device. Correspondingly, the terminal device receives the fifth indication information from the control plane network element.

It may be understood that the control plane network element may send the fifth indication information to the terminal device by using another network element.

For descriptions of the control plane network element, refer to the foregoing descriptions.

Optionally, the fifth indication information may be carried in a detection request.

The fifth indication information may explicitly indicate the terminal device to perform in-situ flow information telemetry on the data flow of the terminal device. An "explicit indication" manner means that an information element indicates the terminal device to perform in-situ flow information telemetry on the data flow of the terminal device. For example, the fifth indication information is a field, and the field may be an IFIT/IOAM indication or an IFIT/IOAM field.

Alternatively, the fifth indication information may implicitly indicate the terminal device to perform in-situ flow information telemetry on the data flow of the terminal device. An "implicit indication" manner means that the fifth indication information includes information about a detection action (or referred to as a processing action). To be specific, if the terminal device receives the information about the processing action sent by the control plane network element, the terminal device performs in-situ flow information telemetry on the data flow of the terminal device.

For a trigger condition based on which the control plane network element sends the fifth indication information to the terminal device, refer to descriptions in the method 400. Details are not described herein again.

S520: The terminal device performs in-situ flow information telemetry on the data flow of the terminal device based on the fifth indication information.

In other words, the terminal device activates or enables an in-situ flow information telemetry function based on the fifth indication information.

Optionally, the data flow of the terminal device is a quality of service QoS flow, and the fifth indication information includes a QoS flow identifier. In this way, the terminal device can perform in-situ flow information telemetry on the QoS flow based on the QoS flow identifier, so that detection at a QoS flow granularity can be implemented.

Optionally, the data flow of the terminal device is a service flow, and the fifth indication information includes a service flow identifier. In this way, the terminal device can perform in-situ flow information telemetry on the service flow based on the service flow identifier, so that detection at a service flow granularity can be implemented.

Optionally, if the data flow of the terminal device is the service flow, the fifth indication information further includes a packet filter corresponding to the service flow identifier (Flow ID).

For a manner of generating the service flow identifier and a case in which the service flow identifier is a global service flow identifier, refer to the foregoing descriptions. Details are not described herein again.

In this embodiment of this application, the terminal device receives the fifth indication information, and performs in-situ flow information telemetry on the data flow of the terminal device based on the fifth indication information. It is time-consuming and inaccurate to locate user plane transmission by using the conventional technology. Compared with the conventional technology, in the data flow detection method in this embodiment of this application, user plane transmission can be quickly located.

Optionally, the method 500 further includes: The terminal device receives information about a second detection action, where the second detection action is used for the data flow (where the data flow may be an uplink data flow or a downlink data flow, which is not limited). The terminal device receives a third data packet of the data flow (where the third data packet may be an uplink data packet or a downlink data packet, which is not limited). The terminal device performs, on the third data packet, a detection action indicated by the information about the second detection action.

The terminal device may be a downlink tail node, an uplink head node, or an intermediate node in a monitoring network (for example, a network including a transport network and/or a cellular network). Correspondingly, the terminal device has different processing behavior. Descriptions are separately provided below.

In a possible implementation, the terminal device is an uplink head node.

For example, the third data packet is a third uplink data packet. Optionally, the method 500 further includes: The terminal device generates a second detection rule based on the information about the second detection action, and sends a fourth uplink data packet to an access network device, where the fourth uplink data packet includes the second detection rule, and the second detection rule indicates an action of performing, by the access network device, in-situ flow information telemetry on the fourth uplink data packet.

The second detection action includes one or more of the following processing actions: coloring, latency measurement, packet loss rate measurement, out-of-order measurement, jitter measurement, timestamp obtaining, queue depth obtaining, queuing latency obtaining, buffer occupation obtaining, forwarding path obtaining, receiving or sending port obtaining, obtained information reporting, and the like. It should be understood that the content included in the processing action is merely an example for description, and this application is not limited thereto. The second detection rule is used to notify the foregoing processing action.

For example, in uplink transmission, when the terminal device needs to send an uplink data packet, the terminal device performs, on the third uplink data packet, the detection action indicated by the information about the second detection action, configures the second detection rule based on the information about the second detection action, and sends the fourth uplink data packet that includes the second detection rule to the access network device.

The terminal device may include sixth indication information in the fourth uplink data packet. Optionally, the fourth uplink data packet carries the sixth indication information, and the sixth indication information indicates the access network device to perform in-situ flow information telemetry on the fourth uplink data packet.

It should be understood that the fourth uplink data packet may include both the second detection rule and the sixth indication information. Alternatively, the fourth uplink data packet includes the second detection rule. Alternatively, the fourth uplink data packet includes the sixth indication information.

Optionally, the fourth uplink data packet may be an access network packet. In other words, the fourth uplink data packet may be based on an access network protocol. The sixth indication information included in the fourth uplink data packet is implemented based on a first field. For example, the terminal device generates a first field, writes the first field into an access network protocol header, and sends an access network protocol header that includes the first field to the access network device.

In a possible implementation, the terminal device may not need to add the first field to an existing protocol (for example, an access network protocol) header or a new protocol layer header, but transmit the sixth indication information based on a control plane message between the terminal device and the access network device, for example, transmit the sixth indication information based on an RRC message.

In a possible implementation, optionally, if the data flow is the service flow, the terminal device writes the first field based on a flow ID corresponding to a packet filter delivered by a network side. When the terminal device is the uplink head node, the terminal device may write the flow ID into the first field. In this way, after receiving the field, a next-hop node may identify, based on the flow ID, a service flow that needs to be detected.

The terminal device may learn, based on an indication of a session management network element, whether the terminal device is the uplink head node.

Optionally, the method 500 further includes: The session management network element sends third information to the terminal device, where the third information indicates that the terminal device is the uplink head node. Correspondingly, the terminal device receives the third information from the session management network element.

The terminal device may learn, based on the third information sent by the session management network element, that the terminal device is the uplink head node. Optionally, the third information may be implemented by using one bit. For example, when a value of the bit is 0, it indicates that the terminal device is not the uplink head node; and when a value of the bit is 1, it indicates that the terminal device is the uplink head node. It should be understood that the examples herein are merely for ease of understanding, and constitute no limitation on embodiments of this application.

For the session management network element, the session management network element may determine, in different manners, that the terminal device is the uplink head node. Manner 1: The session management network element locally configures the terminal device as the uplink head node. Manner 2: The session management network element learns, based on an operator policy, that the terminal device is the uplink head node. Manner 3: The session management network element learns, based on information sent by an AF (where the information indicates that the terminal device is the uplink head node), that the terminal device is the uplink head node.

In a possible implementation, the terminal device is a downlink tail node. The third data packet is a third downlink data packet. Optionally, that the terminal device performs in-situ flow information telemetry on the data flow of the terminal device includes: The terminal device receives a third downlink data packet of the data flow, where the third downlink data packet includes seventh indication information, and the seventh indication information indicates the terminal device to perform in-situ flow information telemetry on the third downlink data packet. The terminal device performs in-situ flow information telemetry on the third downlink data packet based on the seventh indication information.

For example, the third downlink data packet is an access network protocol packet, the seventh indication information is implemented based on a first field, and an access network protocol packet header carries the first field. When receiving an access network protocol packet (for example, an SDAP packet) sent by an access network device, the terminal device may execute a detection instruction based on the first field in the access network protocol packet header.

The terminal device may learn, based on fourth information sent by a session management network element, that the terminal device is the downlink tail node. The fourth information indicates that the terminal device is the downlink tail node. Optionally, the fourth information may be implemented by using one bit. For example, when a value of the bit is 0, it indicates that the terminal device is not the downlink tail node; and when a value of the bit is 1, it indicates that the terminal device is the downlink tail node. It should be understood that the examples herein are merely for ease of understanding, and constitute no limitation on embodiments of this application.

For the session management network element, the session management network element may determine, in different manners, that the terminal device is the downlink tail node. Manner 1: The session management network element locally configures the terminal device as the downlink tail node. Manner 2: The session management network element learns, based on an operator policy, that the terminal device is the downlink tail node. Manner 3: The session management network element learns, based on information sent by an AF (where the information indicates that the terminal device is the downlink tail node), that the terminal device is the downlink tail node.

In a possible implementation, the terminal device is an intermediate node. For example, the terminal device is 5G UE/CPE. That the terminal device performs in-situ flow information telemetry on the data flow of the terminal device includes: The third data packet received by the terminal device carries ninth indication information, and the ninth indication information indicates the terminal device to perform in-situ flow information telemetry on the third data packet. Based on the ninth indication information, the terminal device performs, on the third data packet, the detection action indicated by the information about the second detection action, and sends a fourth data packet to a next-hop node, where the fourth data packet carries tenth indication information, and the tenth indication information indicates the next-hop node to perform in-situ flow information telemetry on the fourth data packet.

Specifically, if the terminal device is the intermediate node (in downlink transmission or uplink transmission), the terminal device performs in-situ flow information telemetry based on a first field carried in the received third data packet (where for example, the ninth indication information is implemented based on the first field). When sending the fourth data packet to the next-hop node, the terminal device adds a first field to the fourth data packet, to indicate the next-hop node to perform in-situ flow information telemetry (where for example, the tenth indication information is implemented based on the first field).

Optionally, before S510, the terminal device sends a request message to the control plane network element. The request message may be a session establishment request message or a session modification message. Optionally, the request message sent by the terminal device may carry detection granularity indication information (for example, indicating a detection QoS granularity or a service flow granularity). If the request message carries the detection granularity indication information, the request message may also carry a QoS flow identifier, a service flow identifier, or other information that can identify a QoS flow/a service flow.

The foregoing describes, from a perspective of the terminal device, some embodiments in which the terminal device performs in-situ flow information telemetry.

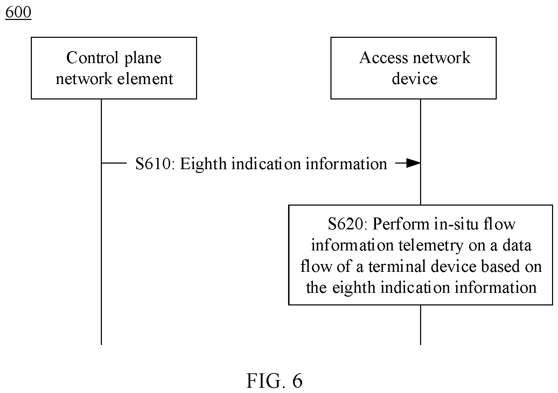

With reference to FIG. 6, the following describes, from a perspective of an access network device, some embodiments in which the access network device performs in-situ flow information telemetry. It should be understood that some features in the following embodiments may be combined with the foregoing embodiments based on a requirement. In addition, explanations or descriptions of terms in the embodiments may be mutually referred to or explained in the embodiments. This is not limited.

FIG. 6 is a schematic interaction diagram of another data flow detection method 600 according to an embodiment of this application. It may be understood that a message or information included in the interaction process in FIG. 6 may be carried in an existing message or signaling, or may be a newly defined message or signaling. This is not specifically limited. As shown in FIG. 6, the method 600 includes the following steps.

S610: A control plane network element (or a management plane network element) sends eighth indication information to an access network device, where the eighth indication information indicates the access network device to perform in-situ flow information telemetry on a data flow of a terminal device. Correspondingly, the access network device receives the eighth indication information from the control plane network element.

For descriptions of the control plane network element, refer to the foregoing descriptions.

Optionally, the eighth indication information may be carried in a detection request.

The eighth indication information may explicitly indicate the access network device to perform in-situ flow information telemetry on the data flow of the terminal device. An "explicit indication" manner means that an information element indicates the access network device to perform in-situ flow information telemetry on the data flow of the terminal device. For example, the eighth indication information is implemented based on a first field, and the first field may be an IFIT/IOAM indication or an IFIT/IOAM field.

For a trigger condition based on which the control plane network element sends the eighth indication information to the access network device, refer to descriptions in the method 400. Details are not described herein again.

S620: The access network device performs in-situ flow information telemetry on the data flow of the terminal device based on the eighth indication information. In other words, the access network device activates or enables an in-situ flow information telemetry function based on the eighth indication information.

Optionally, the data flow of the terminal device is a quality of service QoS flow, and the eighth indication information includes a QoS flow identifier. In this way, the access network device can perform in-situ flow information telemetry on the QoS flow based on the QoS flow identifier, so that detection at a QoS flow granularity can be implemented.

Optionally, the data flow of the terminal device is a service flow, and the eighth indication information includes a service flow identifier. In this way, the access network device can perform in-situ flow information telemetry on the service flow based on the service flow identifier, so that detection at a service flow granularity can be implemented.

In this embodiment of this application, the access network device receives the eighth indication information, and performs in-situ flow information telemetry on the data flow of the terminal device based on the eighth indication information. It is time-consuming and inaccurate to locate end-to-end user plane transmission by using the conventional technology. Compared with the conventional technology, in the data flow detection method in this embodiment of this application, user plane transmission can be quickly located.

In a transmission process, the access network device may implement field conversion in different protocol headers. For example, an access network protocol packet is converted into a GTP-U protocol packet. For another example, a GTP-U protocol packet is converted into an access network protocol packet. For another example, an access network protocol packet is converted into an IPv6 packet or an IPv4 packet. For another example, an IPv6 packet or an IPv4 packet is converted into an access network protocol packet.

In a possible implementation, in uplink transmission, that the access network device performs in-situ flow information telemetry on the data flow of the terminal device based on the eighth indication information includes: The access network device receives a fourth uplink data packet from the terminal device, where the fourth uplink data packet includes a second detection rule, and the second detection rule indicates an action of performing, by the access network device, in-situ flow information telemetry on the fourth uplink data packet. The access network device performs in-situ flow information telemetry based on the second detection rule, to obtain an execution result.

Optionally, the fourth uplink data packet carries sixth indication information, and the sixth indication information indicates the access network device to perform in-situ flow information telemetry on the fourth uplink data packet.

Optionally, the method further includes: The access network device generates third indication information, where the third indication information indicates a user plane function network element to perform in-situ flow information telemetry. The access network device sends a first uplink data packet to the user plane function network element, where the first uplink data packet carries the third indication information. Therefore, the access network device can perform in-situ flow information telemetry based on the second detection rule, and add the third indication information to an uplink data packet when sending the uplink data packet to the access network device, to indicate the user plane function network element to perform in-situ flow information telemetry.

The access network device may generate the third indication information based on the execution result, or may not generate the third indication information based on the execution result. This is not limited in this application.

Optionally, the first uplink data packet is an IPv6 packet, an IPv4 packet, an SRV6 packet, an Ethernet packet, or a GTP-U protocol packet. Unified descriptions are provided herein. The IPv4 packet is an IPv4-enhanced (namely, IPv4-enhanced) protocol, and an IPv4 packet header may be extended. The IPv4-enhanced protocol may be represented by IPv4-en.

Optionally, the fourth uplink data packet is an access network protocol packet.

An example in which the fourth uplink data packet is an access network packet, the first uplink data packet is a GTP-U protocol packet, and the sixth indication information included in the fourth uplink data packet is implemented based on a first field is used for description. After receiving an access network packet of the terminal device, the access network device performs in-situ flow information telemetry on the data flow of the terminal device based on a first field in the access network packet, writes the first field into the GTP-U protocol packet, and sends the GTP-U protocol packet to the user plane function network element. In this way, the first field is written into the GTP-U protocol packet, so that the user plane function network element can identify the first field.

An example in which the fourth uplink data packet is an access network packet, the first uplink data packet is the IPv6 packet or the IPv4 packet, and the sixth indication information included in the fourth uplink data packet is implemented based on a first field is used for description. After receiving an access network packet of the terminal device, the access network device performs in-situ flow information telemetry on the data flow of the terminal device based on a first field in the access network packet, writes the first field into the IPv6 packet or the IPv4 packet, and sends the IPv6 packet or the IPv4 packet to the user plane function network element. In this way, the first field is written into the IPv6 packet or the IPv4 packet, so that collaboration between a cellular network and a transport network can be implemented.

Certainly, in uplink transmission, the access network device may be an intermediate node, or may be an uplink head node. This is not specifically limited in this application.

In a possible implementation, the access network device may be an uplink head node.

When the access network device is the uplink head node, behavior of the access network device is similar to behavior of the terminal device when the terminal device is an uplink head node. Optionally, the method further includes: The access network device receives information about a third detection action, where the third detection action is used for the data flow. The access network device receives a fifth data packet. The access network device performs, on the fifth data packet of the data flow, a detection action indicated by the information about the third detection action. In other words, the access network device may also be used as an uplink head node to perform in-situ flow information telemetry. For descriptions of the third detection action, refer to the foregoing first detection action. Details are not described herein again.

Similarly to a terminal device side, optionally, the fifth data packet is a fifth uplink data packet. The method further includes: The access network device generates a third detection rule based on the information about the third detection action, and sends a sixth uplink data packet to a next-hop node, where the sixth uplink data packet includes the third detection rule, and the third detection rule indicates an action of performing, by the next-hop node, in-situ flow information telemetry on the sixth uplink data packet. In other words, when the access network device is the uplink head node, the access network device may also send a detection rule to the next-hop node.

For descriptions of the third detection rule, refer to descriptions of the foregoing first detection rule. Details are not described herein again.

In a possible implementation, in downlink transmission, the method further includes: The access network device receives a second downlink data packet, where the second downlink data packet includes the first detection rule, and the first detection rule indicates an action of performing, by the access network, in-situ flow information telemetry on the second downlink data packet. The access network device performs in-situ flow information telemetry based on the second indication information, to obtain an execution result.

Optionally, the method further includes: The access network device generates sixth indication information, where the sixth indication information indicates the terminal device to perform in-situ flow information telemetry. The access network device sends a third downlink data packet to the terminal device, where the third downlink data packet includes seventh indication information, and the seventh indication information indicates the terminal device to perform in-situ flow information telemetry on the third downlink data packet. Therefore, the access network device can perform in-situ flow information telemetry based on the first detection rule, and add the seventh indication information to a downlink data packet when sending the downlink data packet to the terminal device, to indicate the terminal device to perform in-situ flow information telemetry.

The access network device may generate the sixth indication information based on the execution result, or may not generate the sixth indication information based on the execution result. This is not limited in this application.

Optionally, the second downlink data packet is an IPv6 packet, an IPv4 packet, an SRV6 packet, an Ethernet packet, or a GTP-U protocol packet.

Optionally, the third downlink data packet is an access network protocol packet.

An example in which the second downlink data packet is the GTP-U protocol packet, and the third downlink data packet is an SDAP protocol packet is used for description. After receiving a GTP-U protocol packet of the user plane function network element, the access network device performs in-situ flow information telemetry on the data flow of the terminal device based on a first field in the GTP-U protocol packet, writes the first field into the SDAP protocol packet, and sends the SDAP protocol packet to the terminal device. In this way, the first field is written into the SDAP protocol packet, so that the terminal device can identify the first field and perform in-situ flow information telemetry based on the first field.

An example in which the second downlink data packet is the IPv6 packet or the IPv4 packet, and the third downlink data packet is the access network protocol packet is used for description. After receiving an IPv6 packet or an IPv4 packet of the user plane function network element, the access network device performs in-situ flow information telemetry on the data flow of the terminal device based on a first field in the IPv6 packet or the IPv4 packet, writes the field into the access network protocol packet, and sends the access network protocol packet to the terminal device. In this way, the first field is written into the access network protocol packet, so that the terminal device can identify the first field and perform in-situ flow information telemetry based on the first field.

Certainly, in downlink transmission, the access network device may be an intermediate node or a downlink head node. This is not specifically limited in this application.

In a possible implementation, the access network device may be a downlink head node.

When the access network device is the downlink head node, behavior of the access network device is similar to behavior of the user plane function network element when the user plane function network element is used as a downlink head node. Optionally, the method further includes: The access network device receives information about a fourth detection action, where the fourth detection action is used for the data flow. That the access network device performs in-situ flow information telemetry on the data flow of the terminal device includes: receiving a seventh data packet of the data flow, and performing, on the seventh data packet, a detection action indicated by the information about the fourth detection action.

For descriptions of the fourth detection action, refer to the foregoing second detection action. Details are not described herein again.

Optionally, the seventh data packet is a seventh downlink data packet. The method further includes: The access network device generates a fourth detection rule based on information about a first detection action, and sends an eighth downlink data packet to a next-hop node, where the eighth downlink data packet includes the fourth detection rule, and the fourth detection rule indicates an action of performing, by the next-hop node, in-situ flow information telemetry on the eighth downlink data packet. The next-hop node may be a router, a switch, an access network device, another user plane function network element, or another transmission node. This is not limited.

For descriptions of the fourth detection rule, refer to descriptions of the foregoing second detection rule. Details are not described herein again.

For ease of understanding, the following provides descriptions with reference to a specific process.

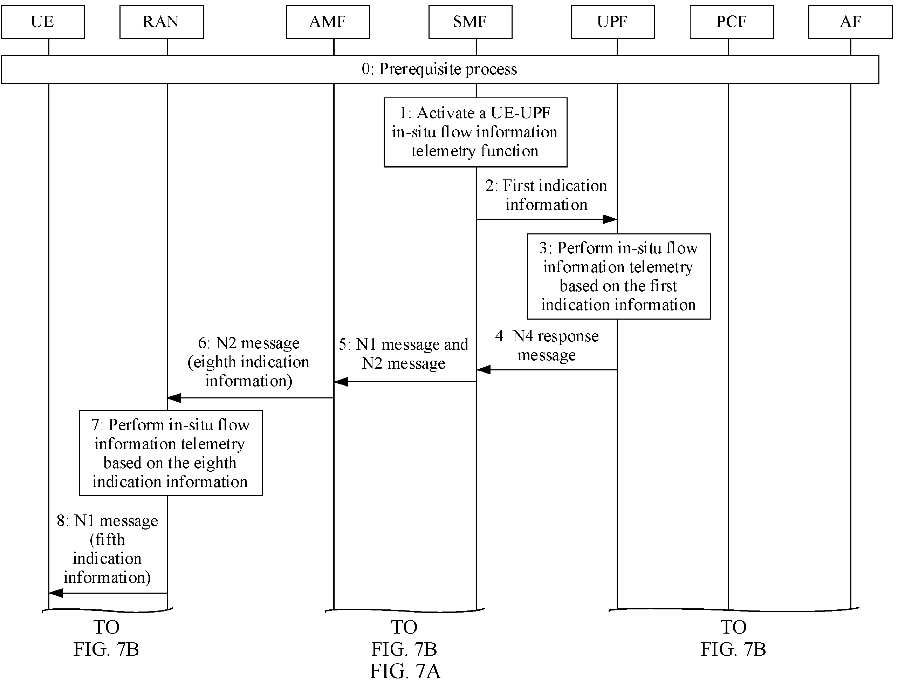

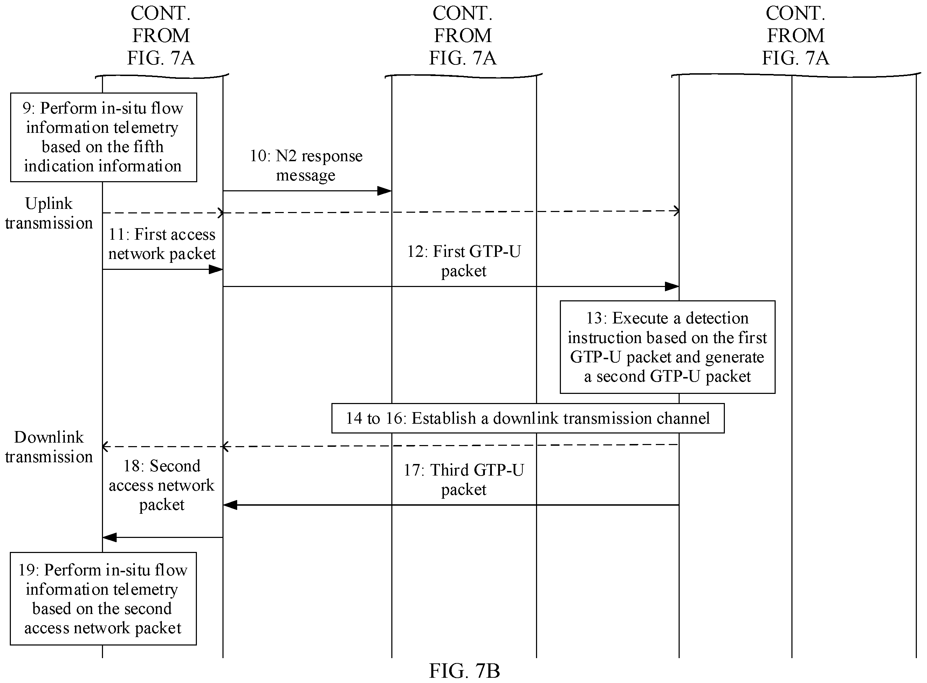

FIG. 7A and FIG. 7B are a flowchart of an example according to an embodiment of this application. FIG. 7A and FIG. 7B are a schematic diagram of an example in which FIG. 4, FIG. 5, or FIG. 6 is applied to a session establishment process or a session modification process. The process may be applied to the architecture of the first part in FIG. 3. As shown in FIG. 7A and FIG. 7B, the method includes the following steps.

Step 0: Prerequisite process.

The prerequisite process in step 0 includes some prerequisite steps in the session establishment process or the session modification process. For example, step 0 may be the same as step 1 to step 9 in a 5G PDU session establishment process (TS 23.502 4.3.2.2.1), or step 1 and step 2 in a 5G PDU session modification process (TS 23.502 4.3.3.2, where 2a and 2b not completed). The prerequisite process is not described in detail herein. Certainly, this is merely an example for description, and this application is not limited thereto. A step of a prerequisite process in later protocol versions may change, and a specific step in a specific protocol version is not limited herein. The prerequisite process in step 0 is forward-compatible with an existing protocol version, or may be applied to a protocol version that is subsequently evolved or developed.

Step 1: An SMF network element activates a UE-UPF in-situ flow information telemetry function.

Specifically, the SMF network element activates the UE-UPF in-situ flow information telemetry function based on an authorized QoS monitoring policy locally configured or sent by a PCF.

Step 2: The SMF sends first indication information to the UPF, where the first indication information indicates the UPF to activate an in-situ flow information telemetry function for a data flow of a terminal device.

Optionally, the first indication information (for example, IFIT/IOAM) is carried in an N4 message (for example, an N4 session establishment/modification request).

The SMF configures a forwarding rule of the UPF based on the N4 message.

Optionally, the N4 message further carries at least one of the following: information about processing actions for a downlink data flow (Actions for DL), information about report events (Report Events), and QoS flow identifiers QFIs.

In step 2, an example in which the SMF sends the first indication information to the UPF is used for description. In another possible implementation, alternatively, a management network element may send first indication information to the UPF. When the management plane network element sends the first indication information to the user plane network element, a management plane message carries at least one of the following: information about processing actions for a downlink data flow (Actions for DL), information about report events (Report Events), and QoS flow identifiers QFIs.

The actions for DL are used by the UPF to generate a first field. For example, the actions for DL include coloring, latency measurement, packet loss rate measurement, out-of-order measurement, jitter measurement, timestamp obtaining, queue depth obtaining, CPU load obtaining, queuing latency obtaining, buffer occupation obtaining, forwarding path obtaining, receiving or sending port obtaining, obtained information reporting, and the like.

The information about the report events is used to configure a trigger condition for reporting detection information. For example, the report events include a reporting frequency, a measurement period, and the like.

Step 3: The UPF performs in-situ flow information telemetry based on the first indication information.

Optionally, the UPF receives information about a first detection action, and generates a first detection rule.

If the QoS flow identifiers QFIs are included in step 2, the UPF performs in-situ flow information telemetry on the QoS flow identifiers QFIs.

Step 4: The UPF sends an N4 response message (for example, an N4 session establishment/modification response) to the SMF.

Step 5: The SMF sends an N1 message and an N2 message to an AMF.

Specifically, the SMF sends an N1 SM Msg and an N2 SM Msg based on a service-based message Namf_Communication_N1N2Message Transfer. After receiving the N1 message and the N2 message, the AMF sends the N2 SM Msg message to a RAN side based on the N2 message, and sends the N1 SM Msg message to the UE side based on the N1 message.

Optionally, the N1 SM Msg includes information such as QoS flow identifiers QFIs, processing actions for an uplink QoS flow (Actions for UL), a first field, and report events (Report Events).

Optionally, the N2 SM Msg includes information such as QoS flow identifiers QFIs, a first field, and report events (Report Events).

Step 6: The AMF sends the N2 message to the RAN. The N2 message includes eighth indication information, and the eighth indication information indicates the RAN to perform in-situ flow information telemetry.

Optionally, the N2 message includes QoS flow identifiers QFIs.

Step 7: The RAN performs in-situ flow information telemetry based on the eighth indication information.

Optionally, if the N2 message further includes information about report events (Report Events), the RAN configures the report events based on the information.

Optionally, if the QoS flow identifiers QFIs are included in step 6, the RAN performs in-situ flow information telemetry on the QoS flow identifiers QFIs.

Step 8: The RAN sends the N1 message to the UE. Optionally, the N1 message includes fifth indication information.

Specifically, the RAN side configures an air interface side resource for an established session/QoS flow or a modified session/QoS flow, and sends the N1 SM Msg to the UE. For content included in the N1 SM Msg, refer to descriptions in step 5.

Optionally, the N1 message includes QoS flow identifiers QFIs.

Step 9: The UE activates the in-situ flow information telemetry function based on the fifth indication information.

Optionally, if the N1 SM Msg includes information about the actions for UL, the UE configures a second detection rule based on the information about the actions for UL.

Optionally, if the QoS flow identifiers QFIs are included in step 8, the UE performs in-situ flow information telemetry on the QoS flow identifiers QFIs.

Step 10: The RAN sends an N2 response message to the AMF.

Specifically, the RAN responds with an air interface resource configuration result based on an N2 PDU session response.

Except for an abnormal case, an air interface transmission channel between the UE and the RAN is established, and an N3 uplink tunnel between the RAN and the UPF is established, so that the UE can send a UL data packet.

Step 11: The UE sends a first access network packet to the RAN.

When the uplink data packet needs to be sent, the UE performs uplink processing actions (actions for UL), generates a first field based on the actions for UL and an execution result (obtained detection information), and then writes the first field into an access network protocol header to generate the first access network packet. Optionally, the UE reports the execution result (obtained detection information) based on the event.

Step 12: The RAN sends a first GTP-U packet to the UPF.

When receiving the UL data packet sent by the UE side, the RAN side executes a specific detection instruction based on a first field in the first access network packet, modifies the field or regenerates the first field based on an execution result, and then rewrites the first field into a GTP-U protocol header to generate the first GTP-U packet. Optionally, the RAN reports the execution result (obtained detection information) based on the event.

Step 13: The UPF executes a detection instruction based on the first GTP-U packet and generates a second GTP-U packet.

When receiving the first GTP-U packet sent by the RAN side, the UPF executes a specific detection instruction based on a first field in the first GTP-U packet, strips the field, and sends the second GTP-U packet to a DN through an N6 interface.

Steps 14 to 16: Establish a downlink transmission channel. For details, refer to existing descriptions.

Specifically, the SMF configures an N3 downlink channel between the RAN and the UPF. After the N3 downlink transmission channel between the RAN and the UPF is established, the UPF may send a DL data packet to the UE.

Step 17: The UPF sends a third GTP-U packet to the RAN.

When the UPF sends the DL data packet, the UPF executes actions for DL, generates a first field based on the actions for DL and an execution result (obtained detection information), then writes the first field into a GTP-U protocol header, and reports the execution result (obtained detection information) based on the event.

Step 18: The RAN sends a second access network packet to the UE.

When receiving the third GTP-U packet sent by the UPF, the RAN side executes a specific detection instruction based on a first field in the third GTP-U packet, modifies the field or regenerates the first field based on an execution result, and then rewrites the first field into the access network protocol header to generate the second access network packet. The RAN reports the execution result (obtained detection information) based on the event.

Step 19: The UE performs in-situ flow information telemetry based on the second access network packet.

After receiving the second access network packet sent by the RAN side, the UE executes a specific detection instruction based on a field in the second access network packet, and reports an execution result based on the event.

Optionally, if the data flow is a QoS flow, detection of the QoS flow may be implemented through the foregoing process in FIG. 7A and FIG. 7B. In addition, when each network element reports a detection result, QoS flow identifiers QFIs may be used as a granularity.

It may be understood that, if the data flow is a service flow, a service flow identifier is a flow ID, and a part related to the QoS flow identifiers QFIs in the foregoing process in FIG. 7A and FIG. 7B may be replaced with the flow ID, to implement detection at a service flow granularity.

For a subsequent step (a PDU session establishment process or a PDU session modification process), refer to descriptions in an existing standard. Details are not described herein again. Alternatively, a subsequent step may alternatively be applied to a standard protocol that is subsequently evolved or developed.

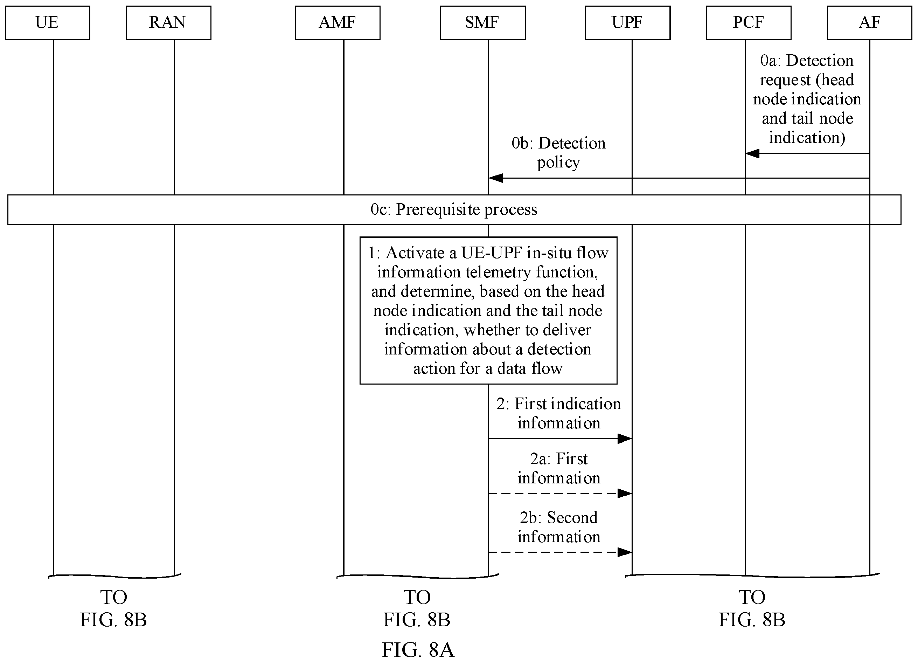

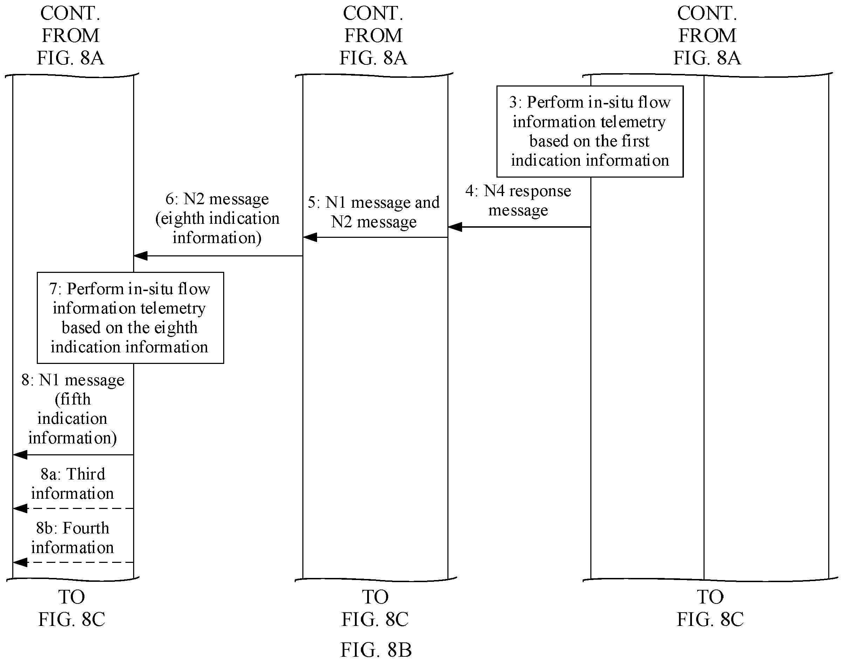

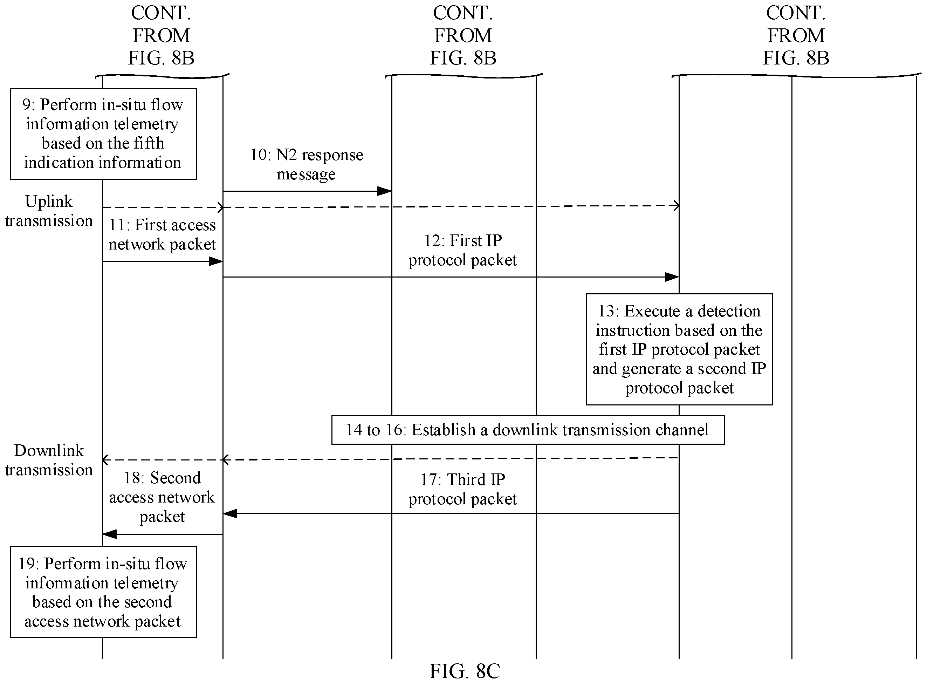

FIG. 8A, FIG. 8B, and FIG. 8C are a flowchart of another example according to an embodiment of this application. FIG. 8A, FIG. 8B, and FIG. 8C are a schematic diagram of another example in which FIG. 4, FIG. 5, or FIG. 6 is applied to a session establishment process or a session modification process. The process may be applied to the architecture shown in the second part in FIG. 3, that is, may be applied to a scenario in which a transport network and a cellular network perform collaborative detection. As shown in FIG. 8A, FIG. 8B, and FIG. 8C, the method includes the following steps.

Step 0a: An AF sends a detection request to a PCF.

The detection request includes a head node indication and a tail node indication, for example, an uplink head node indication, an uplink tail node indication, a downlink head node indication, or a downlink tail node indication.

For example, in the process in FIG. 8A, FIG. 8B, and FIG. 8C, the UE is an uplink head node and a downlink tail node, and the UPF is a downlink head node and an uplink tail node.

Optionally, the detection request further includes a flow ID and a packet filter corresponding to the flow ID.

Step Ob: The PCF sends a detection policy to an SMF.

The detection policy includes content received by the PCF from the AF.

Step 0c: Prerequisite process.

The prerequisite process in step 0c includes some prerequisite steps in the session establishment process or the session modification process. For example, the prerequisite process in step 0c may be the same as step 1 to step 9 in a 5G PDU session establishment process (TS 23.502 4.3.2.2.1), or step 1 and step 2 in a 5G PDU session modification process (TS 23.502 4.3.3.2, where 2a and 2b not completed). Details are not described herein. Certainly, this is merely an example for description, and this application is not limited thereto. A step of a prerequisite process in later protocol versions may change, and a specific step in a specific protocol version is not limited herein. The prerequisite process in step 0 is forward-compatible with an existing protocol version, or may be applied to a protocol version that is subsequently evolved or developed.

Step 1: The SMF network element activates a UE-UPF in-situ flow information telemetry function, and determines, based on a head node indication and a tail node indication, whether to deliver information about a detection action for a data flow.

The SMF network element activates the UE-UPF in-situ flow information telemetry function based on an authorized QoS monitoring policy locally configured or sent by the PCF. In addition, the SMF determines, based on the head node indication or the tail node indication, whether to deliver information about a detection action for a downlink data flow or information about a detection action for an uplink data flow.

Step 2: The SMF sends first indication information to the UPF, where the first indication information indicates the UPF to activate an in-situ flow information telemetry function for a data flow of a terminal device.

Optionally, the first indication information (for example, IFIT/IOAM) is carried in an N4 message (for example, an N4 session establishment/modification request).

Optionally, the N4 message further includes at least one of the following: information about report events, a packet filter corresponding to a flow ID, and information about processing actions (Actions for DL) for a downlink data flow.

Optionally, in step 2a, the SMF may further send first information to the UPF, to indicate that the UPF is a downlink head node.

Optionally, in step 2b, the SMF may further send second information to the UPF, to indicate that the UPF is an uplink tail node.

Step 3: The UPF performs in-situ flow information telemetry based on the first indication information.

Optionally, the UPF receives information about a first detection action (namely, a processing action for the downlink data flow), and generates a first detection rule.

If the packet filter corresponding to the flow ID is included in step 2, the UPF performs in-situ flow information telemetry on the flow ID.

Step 4: The UPF sends an N4 response message (for example, an N4 session establishment/modification response) to the SMF.

Step 5: The SMF sends an N1 message and an N2 message to an AMF.

Specifically, the SMF sends an N1 SM Msg and an N2 SM Msg based on a service-based message Namf_Communication_N1N2Message Transfer. After receiving the N1 message and the N2 message, the AMF sends the N2 SM Msg message to a RAN side based on the N2 message, and sends the N1 SM Msg message to the UE side based on the N1 message.

Optionally, the N1 SM Msg includes information such as a flow ID, processing actions for an uplink QoS flow (Actions for UL), a first field, and report events (Report Events).

Optionally, the N2 SM Msg includes information such as a flow ID, a first field, and report events (Report Events).

Step 6: The AMF sends the N2 message to the RAN. The N2 message includes eighth indication information, and the eighth indication information indicates the RAN to perform in-situ flow information telemetry.

Optionally, the N2 message includes a flow ID.

Step 7: The RAN performs in-situ flow information telemetry based on the eighth indication information.

Optionally, if the N2 message further includes information about report events (Report Events), the RAN configures the report events based on the information.

Optionally, if the flow ID is included in step 6, the RAN performs in-situ flow information telemetry on the flow ID.

Step 8: The RAN sends the N1 message to the UE. Optionally, the N1 message includes fifth indication information.

Specifically, the RAN side configures an air interface side resource for an established session/service flow or a modified session/service flow, and sends the N1 SM Msg to the UE. For content included in the N1 SM Msg, refer to descriptions in step 5.

Optionally, the N1 message includes a flow ID.

Optionally, in step 8a, the RAN may further send third information to the UE, to indicate that the UE is an uplink head node.

Optionally, in step 8b, the RAN may further send fourth information to the UE, to indicate that the UE is a downlink tail node.

Step 9: The UE activates the in-situ flow information telemetry function based on the fifth indication information.

Optionally, if the N1 SM Msg includes information about the actions for UL, the UE configures a second detection rule based on the information about the actions for UL.

Optionally, if the flow ID is included in step 8, the UE performs in-situ flow information telemetry on the flow ID.

Step 10: The RAN sends an N2 response message to the AMF.

The RAN responds with an air interface resource configuration result based on an N2 PDU session response.

Except for an abnormal case, an air interface transmission channel between the UE and the RAN is established, and an N3 uplink tunnel between the RAN and the UPF is established, so that the UE can send a UL data packet.

Step 11: The UE sends a first access network packet to the RAN.

When the uplink data packet needs to be sent, the UE performs actions for UL, generates a first field based on the actions for UL and an execution result (obtained detection information), and then writes the first field into an access network protocol header to generate the first access network packet. Optionally, the UE reports the execution result (obtained detection information) based on the event.

Optionally, if the flow ID is included in step 8, the UE writes, into the first field, a flow ID corresponding to a packet filter in a QoS rule.

A difference between the following steps 12 to 19 and the process in FIG. 7A and FIG. 7B lies in that, in the following steps, the RAN or the UPF needs to convert a packet into an IP protocol packet (for example, an IPv6 protocol packet or an IPv4-en protocol packet), so that the transport network can also obtain a first field, to implement collaborative detection.

Step 12: The RAN sends a first IP protocol packet to the UPF.

When receiving the UL data packet sent by the UE side, the RAN side executes a specific detection instruction based on a first field in the first access network packet, modifies the first field or regenerates the first field based on an execution result, and then rewrites the first field into an IPv6 or IPv4-en protocol header to generate the first IP protocol packet. Optionally, the RAN reports the execution result (obtained detection information) based on the event.

Step 13: The UPF executes a detection instruction based on the first IP protocol packet and generates a second IP protocol packet.

When receiving the first IP protocol packet sent by the RAN side, the UPF executes a specific detection instruction based on a first field in the first IP protocol packet, strips the first field to generate the second IP protocol packet, and finally sends the second IP protocol packet to a DN through an N6 interface.

Steps 14 to 16: The SMF configures an N3 downlink channel between the RAN and the UPF. After the N3 downlink transmission channel between the RAN and the UPF is established, the UPF may send a DL data packet to the UE.

Step 17: The UPF sends a third IP protocol packet to the RAN.

When the UPF sends the DL data packet, the UPF executes actions for DL, generates a first field based on the actions for DL and an execution result (obtained detection information), and then writes the first field into an IP protocol header to generate the third IP protocol packet. The UPF reports the execution result (obtained detection information) based on the event.

Optionally, the UPF writes, into the first field, a flow ID corresponding to a packet filter in a PDR.

Step 18: The RAN sends a second access network packet to the UE.

When receiving the third IP protocol packet sent by the UPF, the RAN side executes a specific detection instruction based on a first field in the third IP protocol packet, modifies the field or regenerates the first field based on an execution result, and then rewrites the first field into the access network protocol header to generate the second access network packet. The RAN reports the execution result (obtained detection information) based on the event.

Step 19: The UE performs in-situ flow information telemetry based on the access network packet.

It may be understood that, for the purpose of collaborative detection by the cellular network and the transport network, a data flow in FIG. 8A, FIG. 8B, and FIG. 8C is a service flow, and a service flow identifier is a global flow ID, namely, an identifier that can be identified by both the cellular network and the transport network, to implement collaborative detection by the cellular network and the transport network, where detection is performed at a service flow granularity. Correspondingly, in the process in FIG. 8A, FIG. 8B, and FIG. 8C, if the execution result is reported based on an event, the execution result may be reported at the service flow granularity.

It can be further understood that the examples in FIG. 7A, FIG. 7B, FIG. 8A, FIG. 8B, and FIG. 8C in embodiments of this application are merely intended to help a person skilled in the art understand embodiments of this application, but are not intended to limit embodiments of this application to specific scenarios in the examples. A person skilled in the art can definitely make various equivalent modifications or changes based on the examples shown in FIG. 7A, FIG. 7B, FIG. 8A, FIG. 8B, and FIG. 8C, and such modifications or changes also fall within the scope of the embodiments of this application.

It can be understood that some optional features in embodiments of this application may be independently implemented in some scenarios without relying on another feature, for example, a solution on which the optional features are currently based, to resolve a corresponding technical problem and achieve a corresponding effect, or may be combined with another feature based on a requirement in some scenarios. Correspondingly, the apparatus provided in embodiments of this application may also correspondingly implement these features or functions. Details are not described herein.

It can be further understood that the solutions in embodiments of this application may be properly combined for use, and explanations or descriptions of terms in embodiments may be mutually referenced or explained in the embodiments. This is not limited.

It can be further understood that sequence numbers of the foregoing processes do not mean execution sequences in various embodiments of this application. The execution sequences of the processes should be determined based on functions and internal logic of the processes. Various numbers or sequence numbers in the foregoing processes are merely for differentiation for ease of description, and shall not constitute any limitation on an implementation process of embodiments of this application.

In the foregoing embodiments provided in this application, the solutions of the service transmission method provided in embodiments of this application are separately described from perspectives of network elements and interaction between the network elements. It may be understood that, to implement the foregoing functions, each network element and device include a corresponding hardware structure and/or software module for performing each function. A person skilled in the art should be easily aware that, with reference to units and algorithm steps in the examples described in embodiments disclosed in this specification, this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

Corresponding to the methods provided in the foregoing method embodiments, an embodiment of this application further provides a corresponding apparatus. The apparatus includes a corresponding module configured to perform the foregoing embodiments. The module may be software, hardware, or a combination of software and hardware. It may be understood that the technical features described in the method embodiments are also applicable to the following apparatus embodiments.

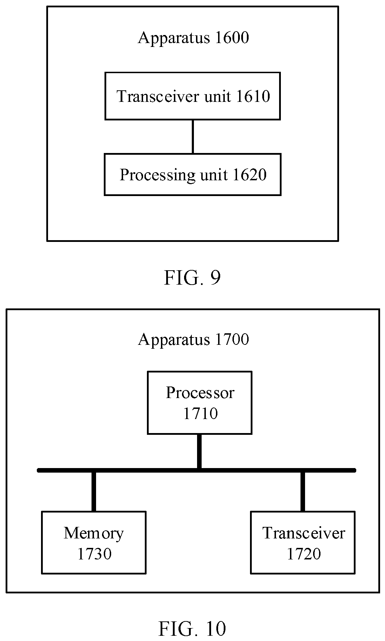

FIG. 9 shows a data flow detection apparatus 1600 according to an embodiment of this application. The apparatus 1600 includes a transceiver unit 1610 and a processing unit 1620.

In a possible implementation, the apparatus 1600 may be the user plane function network element in the foregoing embodiments, or may be a chip in the user plane function network element. The apparatus 1600 may implement corresponding steps or procedures performed by the user plane function network element in the foregoing method embodiments. The transceiver unit 1610 is configured to perform a receiving/sending-related operation of the user plane function network element in the foregoing method embodiments. The processing unit 1620 is configured to perform a processing-related operation of the user plane function network element in the foregoing method embodiments.

The transceiver unit 1610 is configured to receive first indication information from a session management network element, where the first indication information indicates the user plane function network element to perform in-situ flow information telemetry on a data flow of a terminal device.

The processing unit 1620 is configured to perform in-situ flow information telemetry on the data flow of the terminal device based on the first indication information.

Optionally, the apparatus is a downlink head node. The transceiver unit 1610 is further configured to receive information about a first detection action, where the first detection action is used for the data flow. That the processing unit 1620 is configured to perform in-situ flow information telemetry on the data flow of the terminal device includes: invoking the transceiver unit 1610 to receive a first data packet of the data flow; and performing, on the first data packet, a detection action indicated by the information about the first detection action.

Optionally, the first data packet is a first downlink data packet. The processing unit 1620 is further configured to: generate a first detection rule based on the information about the first detection action; and invoke the transceiver unit 1610 to send a second downlink data packet to a next-hop node, where the second downlink data packet includes the first detection rule, and the first detection rule indicates an action of performing, by the next-hop node, in-situ flow information telemetry on the second downlink data packet.

Optionally, the second downlink data packet carries second indication information, and the second indication information indicates the next-hop node to perform in-situ flow information telemetry on the second downlink data packet.

The transceiver unit 1610 is further configured to receive first information from the session management network element, where the first information indicates that the user plane function network element is a downlink head node.

Optionally, the second downlink data packet is an IPv6 packet, an IPv4 packet, an SRV6 packet, an Ethernet packet, or a GTP-U protocol packet.

Optionally, the first data packet is a first uplink data packet. That the processing unit 1620 is configured to perform in-situ flow information telemetry on the data flow of the terminal device includes: The first uplink data packet carries third indication information, where the third indication information indicates the user plane function network element to perform in-situ flow information telemetry; and the transceiver unit 1610 is invoked to send a second uplink data packet to a next-hop node, where the second uplink data packet does not include the third indication information.

Optionally, the transceiver unit 1610 is further configured to receive second information from the session management network element, where the second information indicates that the user plane function network element is an uplink tail node.

Optionally, the second uplink data packet is an IPv6 packet, an IPv4 packet, an SRV6 packet, an Ethernet packet, or a GTP-U protocol packet.

Optionally, the first uplink data packet is an IPv6 packet, an IPv4 packet, an SRV6 packet, an Ethernet packet, or a GTP-U protocol packet.

Optionally, the first data packet carries fourth indication information, and the fourth indication information indicates the user plane function network element to perform in-situ flow information telemetry on the first data packet. The transceiver unit 1610 is further configured to send a second data packet to a next-hop node, where the second data packet carries fifth indication information, and the fifth indication information indicates the next-hop node to perform in-situ flow information telemetry on the second data packet.

Optionally, the data flow is a quality of service flow, and the first indication information includes a QoS flow identifier.

Optionally, the data flow is a service flow, and the first indication information includes a service flow identifier.

In another possible implementation, the apparatus 1600 may be the terminal device in the foregoing embodiments, or may be a chip in the terminal device. The apparatus 1600 may implement corresponding steps or procedures performed by the terminal device in the foregoing method embodiments. The transceiver unit 1610 is configured to perform a receiving/sending-related operation of the terminal device in the foregoing method embodiments. The processing unit 1620 is configured to perform a processing-related operation of the terminal device in the foregoing method embodiments.

The transceiver unit 1610 is configured to receive fifth indication information from a session management network element, where the fifth indication information indicates the terminal device to perform in-situ flow information telemetry on a data flow of the terminal device.

The processing unit 1620 is configured to perform in-situ flow information telemetry on the data flow of the terminal device based on the fifth indication information.

Optionally, the transceiver unit 1610 is further configured to receive information about a second detection action, where the second detection action is used for the data flow.

That the processing unit 1620 is configured to perform in-situ flow information telemetry on the data flow of the terminal device includes: receiving a third data packet of the data flow; and performing, on the third data packet of the data flow, a detection action indicated by the information about the second detection action.

Optionally, the third data packet is a third uplink data packet. The processing unit 1620 is further configured to: generate a second detection rule based on the information about the second detection action, and invoke the transceiver unit 1610 to send a fourth uplink data packet to an access network device, where the fourth uplink data packet includes the second detection rule, and the second detection rule indicates an action of performing, by the access network device, in-situ flow information telemetry on the fourth uplink data packet.

Optionally, the fourth uplink data packet carries sixth indication information, and the sixth indication information indicates the access network device to perform in-situ flow information telemetry on the fourth uplink data packet.

Optionally, the transceiver unit 1610 is further configured to receive third information from the session management network element, where the third information indicates that the terminal device is an uplink head node.

Optionally, the third data packet is a third downlink data packet. That the processing unit 1620 is configured to perform in-situ flow information telemetry on the data flow of the terminal device includes: The third downlink data packet includes seventh indication information, where the seventh indication information indicates the terminal device to perform in-situ flow information telemetry on the third downlink data packet; and in-situ flow information telemetry is performed on the third downlink data packet based on the seventh indication information.

Optionally, the transceiver unit 1610 is further configured to receive fourth information from the session management network element, where the fourth information indicates that the terminal device is a downlink tail node.

Optionally, the data flow is a quality of service flow, and the fifth indication information includes a quality of service QoS flow identifier.

Optionally, the data flow is a service flow, and the fifth indication information includes a service flow identifier.

In another possible implementation, the apparatus 1600 may be the access network device in the foregoing embodiments, or may be a chip in the access network device. The apparatus 1600 may implement corresponding steps or procedures performed by the access network device in the foregoing method embodiments. The transceiver unit 1610 is configured to perform a receiving/sending-related operation of the access network device in the foregoing method embodiments. The processing unit 1620 is configured to perform a processing-related operation of the access network device in the foregoing method embodiments.

The transceiver unit 1610 is configured to receive eighth indication information from a session management network element, where the eighth indication information indicates the access network device to perform in-situ flow information telemetry on a data flow of a terminal device.

The processing unit 1620 is configured to perform in-situ flow information telemetry on the data flow of the terminal device based on the eighth indication information.

Optionally, in uplink transmission, that the processing unit 1620 is configured to perform in-situ flow information telemetry on the data flow of the terminal device based on the eighth indication information includes: invoking the transceiver unit 1610 to receive a fourth uplink data packet from the terminal device, where the fourth uplink data packet includes a second detection rule, and the second detection rule indicates an action of performing, by the access network device, in-situ flow information telemetry on the fourth uplink data packet; performing in-situ flow information telemetry based on the second detection rule, to obtain an execution result; generating third indication information based on the execution result, where the third indication information indicates a user plane function network element to perform in-situ flow information telemetry; and invoking the transceiver unit 1610 to send a first uplink data packet to the user plane function network element, where the first uplink data packet carries the third indication information.

Optionally, the first uplink data packet is an IPv6 packet, an IPv4 packet, an SRV6 packet, an Ethernet packet, or a general packet radio service tunneling protocol for user plane GTP-U packet.

Optionally, the fourth uplink data packet is an access network protocol packet.

Optionally, in downlink transmission, the transceiver unit 1610 is further configured to receive a second downlink data packet, where the second downlink data packet includes a first detection rule, and the first detection rule indicates an action of performing, by the access network, in-situ flow information telemetry on the second downlink data packet. The processing unit 1620 is further configured to perform in-situ flow information telemetry based on second indication information, to obtain an execution result.

Optionally, the processing unit 1620 is further configured to generate sixth indication information, where the sixth indication information indicates the terminal device to perform in-situ flow information telemetry. The transceiver unit 1610 is further configured to send a third downlink data packet to the terminal device, where the third downlink data packet includes seventh indication information, and the seventh indication information indicates the terminal device to perform in-situ flow information telemetry on the third downlink data packet.

Optionally, the second downlink data packet is an IPv6 packet, an IPv4 packet, an SRV6 packet, an Ethernet packet, or a general packet radio service tunneling protocol for user plane GTP-U packet.

Optionally, the third downlink data packet is an access network protocol packet.

In another possible implementation, the apparatus 1600 may be the control plane network element in the foregoing embodiments, or may be a chip in the control plane network element. The apparatus 1600 may implement corresponding steps or procedures performed by the control plane network element in the foregoing method embodiments. The transceiver unit 1610 is configured to perform a receiving/sending-related operation of the control plane network element in the foregoing method embodiments. The processing unit 1620 is configured to perform a processing-related operation of the control plane network element in the foregoing method embodiments.

The processing unit 1620 is configured to generate first indication information, where the first indication information indicates the user plane function network element to perform in-situ flow information telemetry on a data flow of a terminal device. The transceiver unit 1610 is configured to send the first indication information to the user plane network element.

Optionally, the transceiver unit 1610 is further configured to receive a data flow identifier from an application function network element or operation, administration and maintenance.

Optionally, the transceiver unit 1610 is further configured to send information about a first detection action to the user plane function network element, where the first detection action is used for a downlink data flow.

Optionally, the transceiver unit 1610 is further configured to send first information to the user plane function network element, where the first information indicates that the user plane function network element is a downlink head node.

Optionally, the transceiver unit 1610 is further configured to send second information to the user plane function network element, where the second information indicates that the user plane function network element is an uplink tail node.

The processing unit 1620 is configured to generate fifth indication information, where the fifth indication information indicates the terminal device to perform in-situ flow information telemetry on the data flow of the terminal device. The transceiver unit 1610 is configured to send the fifth indication information to the terminal device.

Optionally, the transceiver unit 1610 is further configured to send information about a second detection action to the terminal device, where the second detection action is used for an uplink data flow.

Optionally, the transceiver unit 1610 is further configured to send third information to the terminal device, where the third information indicates that the terminal device is an uplink head node.

Optionally, the transceiver unit 1610 is further configured to send fourth information to the terminal device, where the fourth information indicates that the terminal device is a downlink tail node.

In the foregoing implementation, optionally, the data flow is a quality of service QoS flow, the first indication information includes a QoS flow identifier, and the fifth indication information includes the QoS flow identifier.

In the foregoing implementation, optionally, the data flow is a service flow, the first indication information includes a service flow identifier, and the fifth indication information includes the QoS flow identifier.

In another possible implementation, the apparatus 1600 may be the management plane network element in the foregoing embodiments, or may be a chip in the management plane network element. The apparatus 1600 may implement corresponding steps or procedures performed by the management plane network element in the foregoing method embodiments. The transceiver unit 1610 is configured to perform a receiving/sending-related operation of the management plane network element in the foregoing method embodiments. The processing unit 1620 is configured to perform a processing-related operation of the management plane network element in the foregoing method embodiments.

When the apparatus 1600 is a management plane network element, for steps or procedures performed by the transceiver unit 1610 and the processing unit 1620, refer to the descriptions that the apparatus 1600 is a control plane network element. Details are not described herein again. It should be understood that the apparatus 1600 herein is embodied in the form of a functional unit. The term "unit" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 1600 may be specifically the user plane function network element in the foregoing embodiments, and may be configured to perform procedures and/or steps corresponding to the user plane function network element in the foregoing method embodiments; the apparatus 1600 may be specifically the terminal device in the foregoing embodiments, and may be configured to perform procedures and/or steps corresponding to the terminal device in the foregoing method embodiments; the apparatus 1600 may be specifically the access network device in the foregoing embodiments, and may be configured to perform procedures and/or steps corresponding to the access network device in the foregoing method embodiments; or the apparatus 1600 may be specifically the control plane network element (for example, a policy control function network element or a session management network element) in the foregoing embodiments, and may be configured to perform procedures and/or steps corresponding to the control plane network element in the foregoing method embodiments. To avoid repetition, details are not described herein again.

The apparatus 1600 in the foregoing solutions has a function of implementing corresponding steps performed by the user plane function network element in the foregoing methods. Alternatively, the apparatus 1600 in the foregoing solutions has a function of implementing corresponding steps performed by the terminal device in the foregoing methods. Alternatively, the apparatus 1600 in the foregoing solutions has a function of implementing corresponding steps performed by the access network device in the foregoing methods. Alternatively, the apparatus 1600 in the foregoing solutions has a function of implementing corresponding steps performed by the control plane network element (for example, a policy control function network element or a session management network element) in the foregoing methods. The function may be implemented by hardware, or may be implemented by hardware executing corresponding software. The hardware or software includes one or more modules corresponding to the foregoing function. For example, a transceiver unit may be replaced with a transceiver (for example, a sending unit in the transceiver unit may be replaced with a transmitter, and a receiving unit in the transceiver unit may be replaced with a receiver), and another unit like a processing unit may be replaced with a processor, to separately perform sending and receiving operations and a related processing operation in the method embodiments.

In addition, the transceiver unit may alternatively be a transceiver circuit (where for example, the transceiver circuit may include a receiver circuit and a transmitter circuit), and the processing unit may be a processing circuit. In this embodiment of this application, the apparatus in FIG. 9 may be a network element or a device in the foregoing embodiment, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

FIG. 10 shows another data flow detection apparatus 1700 according to an embodiment of this application. The apparatus 1700 includes a processor 1710 and a transceiver 1720. The processor 1710 and the transceiver 1720 communicate with each other through an internal connection path, and the processor 1710 is configured to execute instructions, to control the transceiver 1720 to send a signal and/or receive a signal.

Optionally, the apparatus 1700 may further include a memory 1730. The memory 1730 communicates with the processor 1710 and the transceiver 1720 through an internal connection path. The memory 1730 is configured to store instructions, and the processor 1710 may execute the instructions stored in the memory 1730. In a possible implementation, the apparatus 1700 is configured to implement procedures and steps corresponding to the user plane function network element in the foregoing method embodiments. In another possible implementation, the apparatus 1700 is configured to implement procedures and steps corresponding to the terminal device in the foregoing method embodiments. In another possible implementation, the apparatus 1700 is configured to implement procedures and steps corresponding to the access network device in the foregoing method embodiments. In another possible implementation, the apparatus 1700 is configured to implement procedures and steps corresponding to the control plane network element (for example, a policy control function network element or a session management network element) in the foregoing method embodiments.

It should be understood that the apparatus 1700 may be specifically the user plane function network element, the terminal device, the access network device, or the control plane network element (for example, a policy control function network element or a session management network element) in the foregoing embodiments, or may alternatively be a chip or a chip system. Correspondingly, the transceiver 1720 may be a transceiver circuit of the chip. This is not limited herein. Specifically, the apparatus 1700 may be configured to perform procedures and steps corresponding to the user plane function network element, the terminal device, the access network device, or the control plane network element (for example, a policy control function network element or a session management network element) in the foregoing method embodiments. Optionally, the memory 1730 may include a read-only memory and a random access memory, and provide an instruction and data to the processor. A part of the memory may further include a nonvolatile random access memory. For example, the memory may further store information about a device type. The processor 1710 may be configured to execute the instruction stored in the memory, and when the processor 1710 executes the instruction stored in the memory, the processor 1710 is configured to perform steps and/or procedures of a method embodiment corresponding to the user plane function network element, the terminal device, the access network device, or the control plane network element (for example, a policy control function network element or a session management network element).

In an implementation process, steps in the foregoing methods can be completed by using a hardware integrated logical circuit in the processor, or by using instructions in a form of software. The steps of the method disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps of the method disclosed with reference to embodiments of this application may be directly performed by a hardware decoding processor, or may be performed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example, and not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (Double Data Rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory in the systems and methods described in this specification includes but is not limited to these and any memory of another proper type.

According to the method provided in embodiments of this application, this application further provides a computer program product. The computer program product includes computer program code. When the computer program code is run on a computer, the computer is enabled to execute steps or procedures performed by the user plane function network element, the terminal device, the access network device, or the control plane network element (for example, a policy control function network element or a session management network element) in embodiments shown in FIG. 4 to FIG. 8C.

According to the method provided in embodiments of this application, this application further provides a computer-readable storage medium. The computer-readable storage medium stores program code. When the program code is run on a computer, the computer is enabled to execute steps or procedures performed by the user plane function network element, the terminal device, the access network device, or the control plane network element (for example, a policy control function network element or a session management network element) in embodiments shown in FIG. 4 to FIG. 8C.

According to the method provided in embodiments of this application, this application further provides a communication system. The communication system includes the user plane function network element, the terminal device, the access network device, or the control plane network element (for example, a policy control function network element or a session management network element).

It should be understood that, in this specification, "at least one" means one or more, and "a plurality of means two or more. "And/or" describes an association relationship between associated objects, and represents that three relationships may exist. For example, A and/or B may represent the following cases: Only A exists, both A and B exist, and only B exists, where A and B may be singular or plural. The character "/" generally represents an "or" relationship between the associated objects. "At least one of the following items (pieces)" or a similar expression thereof indicates any combination of these items, including a single item (piece) or any combination of a plurality of items (pieces). For example, at least one item (piece) of a, b, and c may indicate: a, or b, or c, a and b, a and c, b and c, or a, b, and c, where a, b, and c may be singular or plural.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that is run on the computing device may be components. One or more components may reside within a process and/or an execution thread, and a component may be located on one computer and/or distributed between two or more computers. In addition, these components may be executed from various computer-readable storage media that store various data structures. For example, the components may communicate by using a local and/or remote process and based on, for example, a signal having one or more data packets (for example, data from two components interacting with another component in a local system, a distributed system, and/or across a network, for example, the Internet interacting with other systems based on the signal).

A person of ordinary skill in the art may be aware that the units and algorithm steps described with reference to the examples in embodiments disclosed in this specification may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, and may be located in one position, or may be distributed on a plurality of network units. Some or all of the units may be selected based on actual requirements to achieve the objective of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device or the like) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A data flow detection method, comprising:
receiving, by a user plane function network element, first indication information from a session management network element, wherein the first indication information indicates the user plane function network element to perform in-situ flow information telemetry on a data flow of a terminal device; and
performing, by the user plane function network element, in-situ flow information telemetry on the data flow of the terminal device based on the first indication information.

2. The method according to claim 1, wherein the method further comprises:
receiving, by the user plane function network element, information about a first detection action, wherein the first detection action is used for the data flow; and
the performing, by the user plane function network element, in-situ flow information telemetry on the data flow of the terminal device comprises:
receiving a first data packet of the data flow; and
performing, on the first data packet, a detection action indicated by the information about the first detection action.

3. The method according to claim 2, wherein the first data packet is a first downlink data packet; and the method further comprises:
generating, by the user plane function network element, a first detection rule based on the information about the first detection action; and
sending a second downlink data packet to a next-hop node, wherein the second downlink data packet comprises the first detection rule, and the first detection rule indicates an action of performing, by the next-hop node, in-situ flow information telemetry on the second downlink data packet.

4. The method according to claim 3, wherein the second downlink data packet carries second indication information, and the second indication information indicates the next-hop node to perform in-situ flow information telemetry on the second downlink data packet.

5. The method according to claim 3 or 4, wherein the second downlink data packet is an IPv6 packet, an IPv4 packet, an SRV6 packet, an Ethernet packet, or a general packet radio service tunneling protocol for user plane GTP-U packet.

6. The method according to claim 2, wherein the first data packet is a first uplink data packet, the first uplink data packet carries third indication information, and the third indication information indicates the user plane function network element to perform in-situ flow information telemetry; and
the method further comprises:
sending, by the user plane function network element, a second uplink data packet to a next-hop node, wherein the second uplink data packet does not comprise the third indication information.

7. The method according to claim 6, wherein the second uplink data packet is an IPv6 packet, an IPv4 packet, an SRV6 packet, an Ethernet packet, or a general packet radio service tunneling protocol for user plane GTP-U packet.

8. The method according to claim 6 or 7, wherein the first uplink data packet is an IPv6 packet, an IPv4 packet, an SRV6 packet, an Ethernet packet, or a general packet radio service tunneling protocol for user plane GTP-U packet.

9. The method according to claim 2, wherein the first data packet carries fourth indication information, and the fourth indication information indicates the user plane function network element to perform in-situ flow information telemetry on the first data packet; and
the method further comprises:
sending, by the user plane function network element, a second data packet to a next-hop node, wherein the second data packet carries fifth indication information, and the fifth indication information indicates the next-hop node to perform in-situ flow information telemetry on the second data packet.

10. The method according to any one of claims 1 to 9, wherein the data flow is a quality of service flow, and the first indication information comprises a QoS flow identifier.

11. The method according to any one of claims 1 to 9, wherein the data flow is a service flow, and the first indication information comprises a service flow identifier.

12. A data flow detection method, comprising:
receiving, by a terminal device, fifth indication information from a session management network element, wherein the fifth indication information indicates the terminal device to perform in-situ flow information telemetry on a data flow of the terminal device; and
performing, by the terminal device, in-situ flow information telemetry on the data flow of the terminal device based on the fifth indication information.

13. The method according to claim 12, wherein the method further comprises:
receiving, by the terminal device, information about a second detection action, wherein the second detection action is used for the data flow; and
the performing, by the terminal device, in-situ flow information telemetry on the data flow of the terminal device comprises:
receiving, by the terminal device, a third data packet of the data flow; and
performing, by the terminal device on the third data packet, a detection action indicated by the information about the second detection action.

14. The method according to claim 13, wherein the third data packet is a third uplink data packet; and the method further comprises:
generating, by the terminal device, a second detection rule based on the information about the second detection action; and
sending, by the terminal device, a fourth uplink data packet to an access network device, wherein the fourth uplink data packet comprises the second detection rule, and the second detection rule indicates an action of performing, by the access network device, in-situ flow information telemetry on the fourth uplink data packet.

15. The method according to claim 14, wherein the fourth uplink data packet carries sixth indication information, and the sixth indication information indicates the access network device to perform in-situ flow information telemetry on the fourth uplink data packet.

16. The method according to claim 13, wherein the third data packet is a third downlink data packet, and
the third downlink data packet comprises seventh indication information, and the seventh indication information indicates the terminal device to perform in-situ flow information telemetry on the third downlink data packet; and
the performing, by the terminal device, in-situ flow information telemetry on the data flow of the terminal device comprises: performing, by the terminal device, in-situ flow information telemetry on the third downlink data packet based on the seventh indication information.

17. The method according to any one of claims 12 to 16, wherein the data flow is a quality of service flow, and the fifth indication information comprises a quality of service QoS flow identifier.

18. The method according to any one of claims 12 to 16, wherein the data flow is a service flow, and the fifth indication information comprises a service flow identifier.

19. A data flow detection method, comprising:
receiving, by an access network device, eighth indication information from a session management network element, wherein the eighth indication information indicates the access network device to perform in-situ flow information telemetry on a data flow of a terminal device; and
performing, by the access network device, in-situ flow information telemetry on the data flow of the terminal device based on the eighth indication information.

20. The method according to claim 19, wherein in uplink transmission, the performing, by the access network device, in-situ flow information telemetry on the data flow of the terminal device based on the eighth indication information comprises:
receiving, by the access network device, a fourth uplink data packet from the terminal device, wherein the fourth uplink data packet comprises a second detection rule, and the second detection rule indicates an action of performing, by the access network device, in-situ flow information telemetry on the fourth uplink data packet; and
performing, by the access network device, in-situ flow information telemetry based on the second detection rule, to obtain an execution result.

21. The method according to claim 19 or 20, wherein the method further comprises:
generating, by the access network device, third indication information, wherein the third indication information indicates a user plane function network element to perform in-situ flow information telemetry; and
sending, by the access network device, a first uplink data packet to the user plane function network element, wherein the first uplink data packet carries the third indication information.

22. The method according to claim 20, wherein the first uplink data packet is an IPv6 packet, an IPv4 packet, an SRV6 packet, an Ethernet packet, or a general packet radio service tunneling protocol for user plane GTP-U packet.

23. The method according to any one of claims 20 to 22, wherein the fourth uplink data packet is an access network protocol packet.

24. The method according to claim 19, wherein in downlink transmission, the method further comprises:
receiving, by the access network device, a second downlink data packet, wherein the second downlink data packet comprises a first detection rule, and the first detection rule indicates an action of performing, by the access network device, in-situ flow information telemetry on the second downlink data packet; and
performing, by the access network device, in-situ flow information telemetry based on second indication information, to obtain an execution result.

25. The method according to claim 24, wherein the method further comprises:
generating, by the access network device, sixth indication information, wherein the sixth indication information indicates the terminal device to perform in-situ flow information telemetry; and
sending, by the access network device, a third downlink data packet to the terminal device, wherein the third downlink data packet comprises seventh indication information, and the seventh indication information indicates the terminal device to perform in-situ flow information telemetry on the third downlink data packet.

26. The method according to claim 25, wherein the third downlink data packet is an access network protocol packet.

27. The method according to any one of claims 24 to 26, wherein the second downlink data packet is an IPv6 packet, an IPv4 packet, an SRV6 packet, an Ethernet packet, or a general packet radio service tunneling protocol for user plane GTP-U packet.

28. A communication apparatus, comprising a unit configured to implement the method according to any one of claims 1 to 27.

29. A communication apparatus, comprising:
a processor, configured to execute computer instructions stored in a memory, to enable the apparatus to perform the method according to any one of claims 1 to 27.

30. A computer storage medium, wherein the computer storage medium stores a computer program, and when the computer program is executed by a computer, the method according to any one of claims 1 to 27 is implemented.
